(19) Europäisches Patentamt
European Patent Office
Office européen des brevets

(11) EP 2 853 408 A1

(12) # EUROPEAN PATENT APPLICATION
published in accordance with Art. 153(4) EPC

(43) Date of publication:
**01.04.2015 Bulletin 2015/14**

(21) Application number: **13794701.6**

(22) Date of filing: **17.05.2013**

(51) Int Cl.:
***B41N 1/12*** *(2006.01)* ***C08F 290/00*** *(2006.01)*

(86) International application number:
**PCT/JP2013/063742**

(87) International publication number:
**WO 2013/176040 (28.11.2013 Gazette 2013/48)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **21.05.2012 JP 2012115594**

(71) Applicant: **FUJIFILM Corporation**
**Tokyo 106-8620 (JP)**

(72) Inventor: **USHIJIMA Kenta**
**Haibara-gun**
**Shizuoka 421-0396 (JP)**

(74) Representative: **Hoffmann Eitle**
**Patent- und Rechtsanwälte PartmbB**
**Arabellastraße 30**
**81925 München (DE)**

(54) **RESIN COMPOSITION FOR LASER ENGRAVING, METHOD FOR PRODUCING RELIEF PRINTING PLATE PRECURSOR FOR LASER ENGRAVING, RELIEF PRINTING PLATE PRECURSOR, METHOD FOR PRODUCING RELIEF PRINTING PLATE, AND RELIEF PRINTING PLATE**

(57) The object of the present invention is to provide a relief printing plate precursor for laser engraving that has high ink resistance toward both an aqueous ink and a solvent ink and that is excellent in terms of engraving sensitivity, a process for producing same, and a resin composition for laser engraving that can suitably be used for such a printing plate precursor.

The resin composition for laser engraving of the present invention includes (Component A) a compound that has a crosslinkable group and that is a plastomer at 20°C and (Component B) a crosslinking agent, Component A and Component B having a (meth)acryloyl group as a crosslinkable group, and at least one of Component A and Component B having an ionic group.



Printed by Jouve, 75001 PARIS (FR)

## Description

### Technical Field

The present invention relates to a resin composition for laser engraving, a process for producing a relief printing plate precursor for laser engraving, a relief printing plate precursor, a process for making a relief printing plate, and a relief printing plate.

### Background Art

A large number of so-called "direct engraving CTP methods", in which a relief-forming layer is directly engraved by means of a laser are proposed. In the method, a laser light is directly irradiated to a flexographic printing plate precursor to cause thermal decomposition and volatilization by photothermal conversion, thereby forming a concave part. Differing from a relief formation using an original image film, the direct engraving CTP method can control freely relief shapes. Consequently, when such image as an outline character is to be formed, it is also possible to engrave that region deeper than other regions, or, in the case of a fine halftone dot image, it is possible, taking into consideration resistance to printing pressure, to engrave while adding a shoulder. With regard to the laser for use in the method, a high-power carbon dioxide laser is generally used. In the case of the carbon dioxide laser, all organic compounds can absorb the irradiation energy and convert it into heat. On the other hand, inexpensive and small-sized semiconductor lasers have been developed, wherein, since they emit visible lights and near infrared lights, it is necessary to absorb the laser light and convert it into heat.

As a resin composition for laser engraving, those described in Patent Documents 1 and 2 are known.

Patent Document 1: JP-A-H10-221850 (JP-A denotes a Japanese unexamined patent application publication.)
Patent Document 2: JP-A-2009-255510

### Summary of the Invention

One object of the present invention is to provide a relief printing plate precursor for laser engraving that has high ink resistance toward both an aqueous ink and a solvent ink and that is excellent in terms of engraving sensitivity, and a process for producing same. It is another object of the present invention to provide a resin composition for laser engraving that can suitably be used for such a printing plate precursor. It is yet another object of the present invention to provide a relief printing plate that has high ink resistance toward both an aqueous ink and a solvent ink and that has a high storage modulus, and a process for making same.

The objects of the present invention have been attained by <1> and <9> to <15> below. They are listed together with <2> to <8>, which are preferred embodiments.

<1> A resin composition for laser engraving, comprising (Component A) a compound that comprises a crosslinkable group and that is a plastomer at 20°C, and (Component B) a crosslinking agent, Component A and Component B comprising a (meth)acryloyl group as a crosslinkable group, and at least one of Component A and Component B comprising an ionic group,
<2> the resin composition for laser engraving according to <1>, wherein the ionic group is a neutralized product of an acid and a base or a metal salt of an acid,
<3> the resin composition for laser engraving according to <1> or <2>, wherein the ionic group is a metal salt of an acid,
<4> the resin composition for laser engraving according to any one of <1> to <3>, wherein Component B comprises an ionic group,
<5> the resin composition for laser engraving according to any one of <1> to <4>, wherein it comprises (Component C) a photothermal conversion agent,
<6> the resin composition for laser engraving according to any one of <1> to <5>, wherein it comprises (Component D) a polymerization initiator,
<7> the resin composition for laser engraving according to any one of <1> to <6>, wherein Component B is a metal salt of (meth)acrylic acid,
<8> the resin composition for laser engraving according to any one of <1> to <7>, wherein Component B is a polyvalent metal salt of (meth)acrylic acid,
<9> a relief printing plate precursor for laser engraving comprising a crosslinked relief-forming layer formed by crosslinking by means of heat and/or light a relief-forming layer comprising the resin composition for laser engraving according to any one of <1> to <8>,
<10> a process for producing a relief printing plate precursor for laser engraving, comprising a layer formation step

of forming a relief-forming layer comprising the resin composition for laser engraving according to any one of <1> to <8>, and a crosslinking step of crosslinking the relief-forming layer by means of heat and/or light to thus obtain a relief printing plate precursor comprising a crosslinked relief-forming layer,
<11> a relief printing plate precursor for laser engraving obtained by the production process according to <10>,
<12> a process for making a relief printing plate, comprising an engraving step of laser-engraving the relief printing plate precursor comprising a crosslinked relief-forming layer according to <9> or <11> to thus form a relief layer,
<13> a process for making a relief printing plate, the process comprising a step of preparing the relief printing plate precursor according to <9> or <11>, and an engraving step of laser-engraving the crosslinked relief-forming layer to thus form a relief-forming layer,
<14> a relief printing plate comprising a relief layer, made by the process for making a relief printing plate according to <12> or <13>, and
<15> use of the composition according to any one of <1> to <6> in a relief-forming layer of a relief printing plate precursor for laser engraving.

In accordance with the present invention, there are provided a relief printing plate precursor for laser engraving that has high ink resistance toward both an aqueous ink and a solvent ink and that is excellent in terms of engraving sensitivity, and a process for producing same. There is also provided a resin composition for laser engraving that can suitably be used for such a printing plate precursor. There are also provided a relief printing plate that has high ink resistance toward both an aqueous ink and a solvent ink and that has a high storage modulus, and a process for making same.

<u>Description of Embodiments</u>

(Resin composition for laser engraving)

The resin composition for laser engraving of the present invention (hereinafter, also simply called a 'resin composition') comprises (Component A) a compound that comprises a crosslinkable group and that is a plastomer at 20°C, and (Component B) a crosslinking agent, wherein the crosslinkable group of Component A and Component B is a (meth)acryloyl group, and at least one of Component A and Component B comprises an ionic group.

In the present invention, the notation 'lower limit to upper limit', which expresses a numerical range, means 'at least the lower limit but no greater than the upper limit', and the notation 'upper limit to lower limit' means 'no greater than the upper limit but at least the lower limit'. That is, they are numerical ranges that include the upper limit and the lower limit. In addition, 'mass%' and 'parts by mass' have the same meanings as 'wt%' and 'parts by weight' respectively.

Furthermore, in the present invention, the '(meth)acryloyl group' means both or either one of an acryloyl group and a methacryloyl group.

Moreover, in the present invention, '(Component A) a compound that comprises a crosslinkable group and that is a plastomer at 20°C', etc. may also be called simply 'Component A', etc.

In the explanation below, a combination of a preferred embodiment and a preferred embodiment is a more preferred embodiment.

When a conventional resin for laser engraving is used, there is the problem that the ink resistance toward both an aqueous ink and a solvent ink is not sufficient. A solvent ink is also called an oil-based ink and means an ink comprising as a solvent an organic solvent, whereas an aqueous ink comprises water or water and an alcoholic solvent as the solvent. In the present invention, a solvent ink is the opposite of an aqueous ink, and includes a UV ink. The UV ink referred to here is a UV-curable ink and includes one that does not comprise a solvent.

As a result of an intensive investigation by the present inventors, it has been found that, due to the resin composition for laser engraving comprising Component A and Component B in combination, there can be obtained a relief printing plate precursor for laser engraving that has excellent ink resistance toward both an aqueous ink and a solvent ink, that has a high storage modulus, and that has high engraving sensitivity, and a relief printing plate.

Although the detailed mechanism is unclear it is surmised that, since both Component A and Component B form a crosslinked structure, a film that is tough and exhibits a high storage modulus can be obtained. Furthermore, it is surmised that, due to the crosslinked structure comprising a linking site formed from an ionic group, a hydrophilic section and a hydrophobic section are positioned in turn in the vicinity of each other, the hydrophobic section suppressing penetration into a film when an aqueous ink penetrates and the hydrophilic section suppressing penetration into a film when a solvent ink penetrates, thus giving high ink resistance.

Moreover, as an unexpected effect it has been found that engraving sensitivity improves when the crosslinked structure comprises an ionic group. In addition, since the storage modulus is proportional to the crosslink density of a film, it is generally thought that when the storage modulus is high the engraving sensitivity is degraded. It is surmised that the ionic group dissociates due to heat generated by laser engraving and free ions thus formed promote decomposition

of the crosslinked structure.

In the present specification, with respect to explanation of the relief printing plate precursor and the relief printing plate, a non-crosslinked crosslinkable layer comprising Component A and Component B and having a flat surface as an image formation layer that is subjected to laser engraving is called a relief-forming layer, a layer that is formed by crosslinking the relief-forming layer is called a crosslinked relief-forming layer, and a layer that is formed by subjecting this to laser engraving so as to form asperities on the surface is called a relief layer.

Constituent components of the resin composition for laser engraving of the present invention are explained below.

(Component A) Compound that comprises crosslinkable group and that is plastomer at 20°C

The resin composition for laser engraving of the present invention comprises (Component A) a compound that comprises a crosslinkable group and that is a plastomer at 20°C. When the resin composition for laser engraving of the present invention does not comprise Component A, a relief printing plate precursor having excellent engraving sensitivity and excellent ink resistance to both inks cannot be obtained.

Component A comprises a (meth)acryloyl group as a crosslinkable group. It may comprise as a crosslinkable group a crosslinkable group other than a (meth)acryloyl group, such as for example a vinyl group, but it preferably comprises only a (meth)acryloyl group as a crosslinkable group. It is surmised that due to it comprising a (meth)acryloyl group as a crosslinkable group the reactivity of the (meth)acryloyl group is high and a uniform crosslinked film can be obtained, thus giving a film exhibiting a high storage modulus.

Component A is a compound that is plastomer at 20°C. In the present invention, a "compound that is plastomer at 20°C" is also simply called a "plastomer".

The term 'plastomer' as used in the present invention means, as described in 'Shinpan Kobunshi Jiten (Newly-published Polymer Encyclopedia)' edited by the Society of Polymer Science, Japan (published in 1988 by Asakura Publishing Co., Ltd., Japan), a macromolecule which has a property of easily undergoing fluid deformation by heating and being capable of solidifying into a deformed shape by cooling. The term 'plastomer' is a term opposed to the term 'elastomer' (a polymer having a property of, when an external force is added, instantaneously deforming in accordance with the external force, and when the external force is removed, being restored to the original shape in a short time), and the plastomer does not exhibit the same elastic deformation as that exhibited by an elastomer, and easily undergoes plastic deformation.

In the present invention, a plastomer means a polymer which, when the original size is designated as 100%, can be deformed up to 200% of the original size by a small external force at room temperature (20°C), and even if the external force is removed, does not return to 130% or less of the original size. More particularly, the plastomer means a polymer with which, based on the tensile permanent strain test of JIS K 6262-1997, an I-shaped specimen can be extended to 2 times the gauge length before pulling in a tensile test at 20°C, and the tensile permanent strain measured after extending the specimen to 2 times the gauge length before pulling, subsequently maintaining the specimen for 5 minutes, removing the external tensile force, and maintaining the specimen for 5 minutes, is 30% or greater.

Meanwhile, in the case of a polymer that cannot be subjected to the measurement described above, a polymer which is deformed even if an external force is not applied and does not return to the original shape, corresponds to a plastomer, and for example, a syrup-like resin, an oil-like resin, and a liquid resin correspond thereto.

Furthermore, the plastomer according to the present invention is such that the glass transition temperature (Tg) of the polymer is lower than 20°C. In the case of a polymer having two or more Tg's, all the Tg's are lower than 20°C.

In the present invention, even when a high storage modulus is exhibited, due to Component A being a plastomer at 20°C a film that shows high flexibility and is suitable for a flexographic printing plate can be obtained.

Component A preferably has a number-average molecular weight of at least 3,000. The number-average molecular weight is more preferably 3,000 to 300,000, yet more preferably 4,000 to 200,000, and particularly preferably 5,000 to 100,000. It is preferable for the number-average molecular weight of Component A to be within this range since it is easy to process a resin composition for laser engraving comprising Component A, and a relief printing plate precursor and a relief printing plate that are excellent in terms of strength are obtained.

The number-average molecular weight of Component A is measured by a GPC (gel permeation chromatograph) method and determined using a standard polystyrene calibration curve.

Examples of Component A include (Component A-1) a compound that does not comprise an ionic group, that comprises a (meth)acryloyl group as a crosslinkable group, and that is a plastomer at 20°C, and (Component A-2) a compound that comprises an ionic group, that comprises a (meth)acryloyl group as a crosslinkable group, and that is a plastomer at 20°C.

The compound that comprises an ionic group referred to in the present invention means a compound that has an ionic bond between a cation and an anion in the molecule.

Specific examples include, but are not limited to, a neutralized product of an organic acid (anion) and an organic

base (cation), and a metal salt of an organic acid.

Examples of the organic acid include a compound comprising an anionic group such as a carboxylate group (-(CO)O$^-$), a phosphonate group (-$PO_3^{2-}$), a sulfonate group (-$SO_3^-$), or a sulfinate group (-$SO_2^-$). Examples of the organic base include a compound comprising a cationic group such as an ammonium group (-$NR_3^+$, the Rs independently denote a hydrogen atom or a monovalent organic group), a heteroaromatic compound (e.g. a compound comprising a pyridinium group or an imidazolium group), and derivatives thereof.

Each thereof is explained below.

(Component A-1) Compound that does not comprise ionic group, that comprises (meth)acryloyl group as crosslinkable group, and that is plastomer at 20°C

In the present invention, (Component A-1) a compound that does not comprise an ionic group, that comprises a (meth)acryloyl group as a crosslinkable group, and that is a plastomer at 20°C can be cited as an example of Component A.

Component A-1 is not particularly limited as long as it is a compound that comprises a (meth)acryloyl group at a main chain terminal or in a side chain, that does not comprise an ionic group, and that is a plastomer at 20°C, and may be appropriately selected and used.

Component A-1 includes (Component A-1-1) a (meth)acryloyl group-containing urethane resin, (Component A-1-2) a (meth)acryloyl group-containing (meth)acrylic resin, and (Component A-1-3) a (meth)acryloyl group-containing polyester resin, these not comprising an ionic group.

(Component A-1-1) (Meth)acryloyl group-containing urethane resin that does not comprise ionic group

In the present invention, examples of Component A-1 include (Component A-1-1) a (meth)acryloyl group-containing urethane resin that does not comprise an ionic group.

Component A-1-1 comprises a (meth)acryloyl group, the average number of (meth)acryloyl groups contained per molecule of Component A-1-1 being preferably at least 0.7, more preferably 0.8 to 20, and yet more preferably 1.2 to 10. It is preferable for the average number of (meth)acryloyl groups per molecule of Component A-1-1 to be within this range since a relief printing plate precursor and a relief printing plate that are obtained are excellent in terms of mechanical strength and durability.

The average number of (meth)acryloyl groups per molecule is determined by a molecular structural analysis method using NMR (nuclear magnetic resonance spectrum). In the present invention, $^1$H (proton)-NMR is used, but $^{13}$C-NMR may be used. From the viewpoint of resolution, when proton NMR is used it is preferable to use an instrument having a measurement frequency of at least 100 MHz.

Component A-1-1 may comprise a (meth)acryloyl group in the main chain or in the side chain without any particular limitation, but it is preferable for it to comprise a (meth)acryloyl group at a main chain terminal, and it is more preferable for it to comprise a (meth)acryloyl group at both main chain termini. It is preferable for it to comprise a (meth)acryloyl group at a main chain terminal since high reactivity is obtained due to the high mobility of a main chain terminal and a film having high flexibility is obtained due to the long distance between crosslinked sites.

In the present invention, a process for producing Component A-1-1 is not particularly limited, and examples thereof include a method in which a (meth)acryloyl group is introduced directly at a molecular terminal of a polymer and a method in which a polymer comprising a reactive group such as a hydroxy group or an isocyanate group and a compound comprising a (meth)acryloyl group and a group that can form a bond with the reactive group are reacted to thus introduce a (meth)acryloyl group.

In the present invention, as a synthetic method for the Component A-1-1 that comprises a (meth)acryloyl group in a side chain, a method in which a polyol comprising a (meth)acryloyl group and a polyisocyanate are reacted can be cited as an example. Examples of the polyol used include Blemmer GLM (NOF Corporation), trimethylolpropane mono(meth)acrylate, pentaerythritol mono(meth)acrylate, pentaerythritol di(meth)acrylate, and glycerol mono(meth)acrylate. One type thereof may be used on its own or two or more types may be used in combination.

In the present invention, the synthetic method for the Component A-1-1 that comprises a (meth)acryloyl group at a main chain terminal is not particularly limited, but the two methods below can be cited as examples.

(i) A method in which a polyol and a polyisocyanate are reacted to thus form a polyurethane comprising an isocyanate group at a terminal with any molecular weight, and this polyurethane is subsequently reacted with a compound comprising an active hydrogen and a (meth)acryloyl group in the molecule.

(ii) A method in which a polyol and a polyisocyanate are reacted to thus form a polyurethane comprising a hydroxy group at a terminal with any molecular weight, and this polyurethane is subsequently reacted with a compound comprising an isocyanate group and a (meth)acryloyl group in the molecule.

Examples of the polyol used in methods (i) and (ii) above include a polybutadienepolyol, a hydrogenated polybutadienepolyol, a polyisoprenepolyol, a polyether polyol, a polyester polyol, and a polyol formed by copolymerization of a polyether and a polyester.

One type thereof may be used on its own or two or more types may be used in combination.

The polybutadienepolyol is preferably a polybutadienepolyol, and examples thereof include G-1000, G-2000, and G-3000 (Nippon Soda Co., Ltd.) and Poly bd (Idemitsu Kosan Co., Ltd.). Furthermore, the hydrogenated polybutadienepolyol is preferably a hydrogenated polybutadienediol, and specific examples include GI-1000, GI-2000, and GI-3000 (Nippon Soda Co., Ltd.) and Epol (Idemitsu Kosan Co., Ltd.). Moreover, the polyisoprenepolyol is preferably a polybutadienediol, and specific examples include Poly ip (Idemitsu Kosan Co., Ltd.).

Examples of the polyether polyol include polyoxyethylene glycol, polyoxypropylene glycol, polyoxytetramethylene glycol, polyoxy-1,2-butylene glycol, a polyoxyethylene/polyoxypropylene random copolymer glycol, a polyoxyethylene/polyoxypropylene block copolymer glycol, a polyoxyethylene/polyoxytetramethylene random copolymer glycol, and a polyoxyethylene/polyoxytetramethylene block copolymer glycol. One type thereof may be used on its own or two or more types may be used in combination.

Examples of the polyester polyol include a condensation-based polyester polyol, that is, a diol having a repeating polyester segment obtained by a polycondensation reaction between a glycol compound and a dicarboxylic acid compound. Examples of such a diol include an adipic acid ester-based diol such as poly(ethylene glycol adipate)diol, poly(diethylene glycol adipate)diol, poly(propylene glycol adipate)diol, poly(1,4-butane glycol adipate)diol, poly(1,6-hexane glycol adipate)diol, poly(2-methylpropane glycol adipate)diol, poly(3-methyl-1,5-pentane glycol adipate)diol, poly(neopentyl glycol adipate)diol, poly(1,9-nonane glycol adipate)diol, poly(2-methyloctane glycol adipate)diol, polycaprolactonediol, and poly(β-methyl-γ-valerolactone)diol. Examples of the dicarboxylic acid compound forming the polyester segment include, in addition to adipic acid, succinic acid, glutaric acid, azelaic acid, sebacic acid, maleic acid, terephthalic acid, isophthalic acid, and 1,5-naphthalenedicarboxylic acid.

As shown in the examples above, the polyester segment is generally formed by a polycondensation reaction between a single type of diol compound and a single type of dicarboxylic acid compound. However, it is also possible to form a polyester segment by polycondensation using a plurality of types of either one or both compounds and mixing at any proportions. As the polyester polyol, in addition to the condensation-type polyester polyol, a lactone-based polyester polyol or a polyester polycarbonate polyol may be used, and one type thereof may be used on its own, or two or more types may be used in combination.

Examples of the polyester polycarbonate polyol include a polymer obtainable by allowing a polyol component, a polycarboxylic acid component and a carbonate compound to simultaneously react; a polymer obtainable by allowing a polyester polyol and a polycarbonate polyol that have been synthesized in advance to react with a carbonate compound; and a polymer obtainable by allowing a polyester polyol and a polycarbonate polyol that have been synthesized in advance to react with a polyol component and a polycarboxylic acid component.

Examples of the polycarbonate polyol include those obtained by a reaction between a polyol component and a carbonate compound such as a dialkyl carbonate, an alkylene carbonate, or a diaryl carbonate.

Examples of the polyol component forming the polycarbonate polyol include those usually used in the production of a polycarbonate polyol, for example, an aliphatic diol having 2 to 15 carbons such as ethylene glycol, diethylene glycol, triethylene glycol, propylene glycol, 1,3-propanediol, 2-methyl-1,3-propanediol, 2,2-diethyl-1,3-propanediol, 1,3-butanediol, 1,4-butanediol, 2-methyl-1,4-butanediol, neopentyl glycol, 1,5-pentanediol, 3-methyl-1,5-pentanediol, 1,6-hexanediol, 1,7-heptanediol, 1,8-octanediol, 2-methyl-1,8-octanediol, 2,7-dimethyl-1,8-octanediol, 1,9-nonanediol, 2-methyl-1,9-nonanediol, 2,8-dimethyl-1,9-nonanediol, or 1,10-decanediol; an alicyclic diol such as 1,4-cyclohexanediol, cyclohexanedimethanol, or cyclooctanedimethanol; an aromatic diol such as 1,4-bis(β-hydroxyethoxy)benzene; and a polyhydric alcohol having three or more hydroxy groups per molecule such as trimethylolpropane, trimethylolethane, glycerol, 1,2,6-hexanetriol, pentaerythritol, or diglycerol. When producing a polycarbonate polyol, with regard to these polyol components, one type thereof may be used or two or more types thereof may be used in combination.

Among them, when producing the polycarbonate polyol, it is preferable to use as the polyol component an aliphatic diol having 5 to 12 carbons and having a methyl group as a side chain, such as 2-methyl-1,4-butanediol, 3-methyl-1,5-pentanediol, 2-methyl-1,8-octanediol, 2,7-dimethyl-1,8-octanediol, 2-methyl-1,9-nonanediol, or 2,8-dimethyl-1,9-nonanediol. In particular, it is preferable to use such an aliphatic diol having 5 to 12 carbons and having a methyl group as a side chain at a proportion of at least 30 mole% of the total polyol components used in the production of the polyester polyol, and more preferably at least 50 mole% of the total polyol components.

Examples of the dialkyl carbonate include dimethyl carbonate and diethyl carbonate, examples of the alkylene carbonate include ethylene carbonate, and examples of the diaryl carbonate include diphenyl carbonate.

The polycarbonate polyol is preferably a polycarbonate diol represented by Formula (1) below.

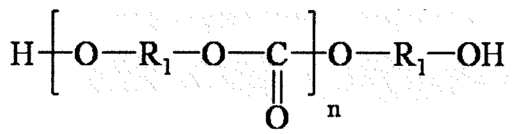

(1)

In Formula (1), the $R_1$s independently denote a straight-chain, branched, and/or cyclic hydrocarbon group having 3 to 50 carbons, which may contain an oxygen atom, etc. (at least one type of atom selected from the group consisting of nitrogen, sulfur, and oxygen) in a carbon skeleton, and $R_1$ may be a single component or comprise a plurality of components. n is preferably an integer of 1 to 500.

The 'hydrocarbon group' in $R_1$ is a saturated or unsaturated hydrocarbon group.

The 'carbon skeleton' in $R_1$ means a structural part having 3 to 50 carbons forming the hydrocarbon group, and the term 'which may contain an oxygen atom, etc. in a carbon skeleton' means a structure in which an oxygen atom, etc. is inserted into a carbon-carbon bond of a main chain or a side chain. Furthermore, it may be a substituent having an oxygen atom, etc., bonded to a carbon atom in a main chain or a side chain.

Examples of the straight-chain hydrocarbon group in $R_1$ include a hydrocarbon group derived from a straight-chain aliphatic diol having 3 to 50 carbons such as 1,3-propanediol, 1,4-butanediol, 1,5-pentanediol, 1,6-hexanediol, 1,7-heptanediol, 1,8-octanediol, 1,9-nonanediol, 1,10-decanediol, 1,12-dodecanediol, 1,16-hexadecanediol, or 1,20-eicosanediol.

Examples of the branched hydrocarbon group in $R_1$ include a hydrocarbon group derived from a branched aliphatic diol having 3 to 30 carbons such as 2-methyl-1,3-propanediol, 2-ethyl-1,3-propanediol, neopentyl glycol, 2,2-diethyl-1,3-propanediol, 2-methyl-2-propyl-1,3-propanediol, 2-butyl-2-ethyl-1,3-propanediol, 2,2-dibutyl-1,3-propanediol, 1,2-butanediol, 2-ethyl-1,4-butanediol, 2-isopropyl-1,4-butanediol, 2,3-dimethyl-1,4-butanediol, 2,3-diethyl-1,4-butanediol, 3,3-dimethyl-1,2-butanediol, pinacol, 1,2-pentanediol, 1,3-pentanediol, 2,3-pentanediol, 2-methyl-2,4-pentanediol, 3-methyl-1,5-pentanediol, 2-ethyl-1,5-pentanediol, 3-ethyl-1,5-pentanediol, 2-isopropyl-1,5-pentanediol, 3-isopropyl-1,5-pentanediol, 2,4-dimethyl-1,5-pentanediol, 2,4-diethyl-1,5-pentanediol, 2,3-dimethyl-1,5-pentanediol, 2,2,3-trimethyl-1,3-pentanediol, 1,2-hexanediol, 1,3-hexanediol, 1,4-hexanediol, 2,5-hexanediol, 2-ethyl-1,6-hexanediol, 2-ethyl-1,3-hexanediol, 2-isopropyl-1,6-hexanediol, 2,4-diethyl-1,6-hexanediol, 2,5-dimethyl-2,5-hexanediol, 2-methyl-1,8-octanediol, 2-ethyl-1,8-octanediol, 2,6-dimethyl-1,8-octanediol, 1,2-decanediol, or 8,13-dimethyl-1,20-eicosanediol.

Examples of the cyclic hydrocarbon group in $R_1$ include a hydrocarbon group derived from a cyclic aliphatic diol having 3 to 30 carbons such as 1,2-cyclohexanediol, 1,3-cyclohexanediol, 1,4-cyclohexanediol, 1,2-cyclohexanedimethanol, 1,3-cyclohexanedimethanol, 1,4-cyclohexanedimethanol, *m*-xylene-α,α'-diol, *p*-xylene-α,α'-diol, 2,2-bis(4-hydroxycyclohexyl)propane, 2,2-bis(4-hydroxyphenyl)propane, or dimer diol.

A hydrocarbon group derived from a straight-chain aliphatic diol having 3 to 50 carbons is explained as an example: in the present invention, the 'hydrocarbon group derived from a straight-chain aliphatic diol having 3 to 50 carbons' means a group which is a partial structure, excluding the diol hydroxy groups, of the straight-chain aliphatic diol having 3 to 50 carbons.

Examples of the hydrocarbon group containing at least one type of atom selected from the group consisting of nitrogen, sulfur, and oxygen in $R_1$ include a hydrocarbon group derived from diethylene glycol, triethylene glycol, tetraethylene glycol, glycerol, 1,2,6-hexanetriol, trimethylolethane, trimethylolpropane, pentaerythritol, dihydroxyacetone, 1,4:3,6-dianhydroglucitol, diethanolamine, *N*-methyldiethanolamine, dihydroxyethylacetamide, 2,2'-dithiodiethanol, or 2,5-dihydroxy-1,4-dithiane, and a group represented by Formula (2) below.

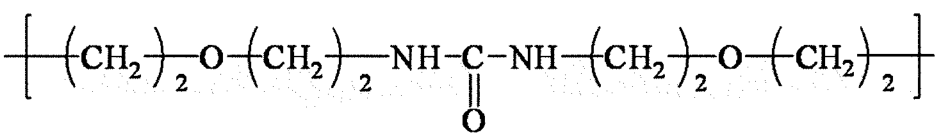

(2)

A polycarbonate diol may be produced by for example a conventionally known method as described in JP-B-5-29648 (JP-B denotes a Japanese examined patent application publication), and specifically it may be produced by an ester exchange reaction between a diol and a carbonic acid ester.

In Formula (1) above, from the viewpoint of solvent resistance, $R_1$ preferably contains at least one ether bond, and from the viewpoint of solvent resistance and durability, $R_1$ is more preferably a group derived from diethylene glycol (group represented by $-(CH_2)_2-O-(CH_2)_2-$).

Examples of the polyether polyester copolymer polyol include a copolymer having a structure in which a repeating unit forming a molecular chain of the polyether polyol and a repeating unit forming a molecular chain of the polyester polyol are bonded as blocks or randomly. With regard to the polyether polyester copolymer polyol, one type thereof may

be used on its own or two or more types may be used in combination.

Examples of the polyisocyanate compound used in the method of (i) and (ii) include a diisocyanate compound such as tolylene diisocyanate, xylylene diisocyanate, hexamethylene diisocyanate, trimethylhexamethylene diisocyanate, isophorone diisocyanate, diphenylmethane diisocyanate, dicyclohexylmethane diisocyanate, tetramethylxylylene diisocyanate, naphthalene diisocyanate, *p*-phenylene diisocyanate, cyclohexylene diisocyanate, lysine diisocyanate, or triphenylmethane diisocyanate; and a triisocyanate compound such as triphenylmethane triisocyanate, 1-methylbenzene-2,4,6-triisocyanate, naphthalene-1,3,7-triisocyanate, or biphenyl-2,4,4'-triisocyanate. One type thereof may be used on its own or two or more types may be used in combination.

Examples of the compound having a (meth)acryloyl group and an active hydrogen in the molecule used in method (i) above include hydroxypropyl (meth)acrylate, hydroxyethyl (meth)acrylate, polypropylene glycol mono(meth)acrylate, polyethylene glycol mono(meth)acrylate, glycerol mono(meth)acrylate, and glycerol di(meth)acrylate.

Examples of the compound having an isocyanate group and a (meth)acryloyl group in the molecule used in method (ii) above include (meth)acryloyloxyethyl isocyanate.

In the present specification, a polyurethane in which a polyol structure is formed from a polyether segment is also called a 'polyether-based polyurethane', a polyurethane in which a polyol structure is formed from a polyester is also called a 'polyester-based polyurethane', and a polyurethane in which a polyol structure is formed from a polyether segment and a polyester segment is also called a 'polyether polyester-based polyurethane'.

Among them, from the viewpoint of exhibition of high flexibility and durability of a flexographic printing plate produced using the resin composition for laser engraving of the present embodiment, Component A desirably comprises a polyester-based polyurethane.

The polyester-based polyurethane improves the storage stability of a flexographic printing plate due to its polyester skeleton.

(Component A-1-2) (Meth)acryloyl group-containing (meth)acrylic resin that does not comprise ionic group

In the present invention, (Component A-1-2) a (meth)acryloyl group-containing (meth)acrylic resin may be used as Component A-1.

Component A-1-2 comprises a (meth)acryloyl group, the average number of (meth)acryloyl groups per molecule of Component A-1-2 being preferably at least 0.7. The average number of (meth)acryloyl groups is more preferably 0.8 to 100, and yet more preferably 1.2 to 20. It is preferable for the average number of (meth)acryloyl groups per molecule of Component A-1-2 to be within this range since a relief printing plate precursor and a relief printing plate that are obtained are excellent in terms of mechanical strength and durability.

The (meth)acryloyl group-containing (meth)acrylic resin may be easily synthesized by any of the known methods below.

An ethylenically unsaturated group-containing carboxylic acid as an essential component is first subjected to radical copolymerization with a (meth)acrylic acid ester and, as necessary, another ethylenically unsaturated compound, thus producing a carboxyl group-containing resin. Subsequently, a carboxyl group of the carboxyl group-containing resin so obtained is reacted with an epoxy group-containing unsaturated compound comprising a (meth)acryloyl group, thus giving a (meth)acryloyl group-containing (meth)acrylic resin.

The ethylenically unsaturated group-containing carboxylic acid is a compound comprising an ethylenically unsaturated group in the molecule and at least one carboxyl group; specific examples include an $\alpha$,$\beta$-ethylenically unsaturated carboxylic acid such as acrylic acid, methacrylic acid, itaconic acid, maleic acid, crotonic acid, fumaric acid, or $\beta$-carboxylethyl acrylate.

Examples of the (meth)acrylic acid ester include a 1 to 24 carbon alkyl or cycloalkyl ester of acrylic acid or methacrylic acid such as methyl (meth)acrylate, ethyl (meth)acrylate, *n-, i-,* or *t*-butyl (meth)acrylate, hexyl (meth)acrylate, octyl (meth)acrylate, lauryl (meth)acrylate, stearyl (meth)acrylate, or cyclohexyl (meth)acrylate, a 1 to 8 carbon hydroxyalkyl ester of acrylic acid or methacrylic acid such as 2-hydroxyethyl (meth)acrylate, 2- or 3-hydroxypropyl (meth)acrylate, or 4-hydroxybutyl (meth)acrylate, the mono(meth)acrylate of a glycol, such as ethylene glycol mono(meth)acrylate, methoxyethylene glycol mono(meth)acrylate, tetraethylene glycol mono(meth)acrylate, or tripropylene glycol mono(meth)acrylate, benzyl (meth)acrylate, and isobornyl (meth)acrylate.

Examples of other ethylenically unsaturated compounds include an aromatic vinyl monomer such as styrene, hydroxystyrene, vinyltoluene, or $\alpha$-methylstyrene, maleic anhydride, an acrylamide or methacrylamide such as maleimide, acrylamide, methacrylamide, *N*-methylacrylamide, *N*-ethylmethacrylamide, diacetoneacrylamide, *N*-methylolacrylamide, *N*-methylolmethacrylamide, *N*-methoxymethylacrylamide, or *N*-butoxymethylacrylamide or a derivative thereof, vinyl propionate, vinyl acetate, acrylonitrile, methacrylonitrile, vinyl pivalate, and a VeoVa monomer (Shell Chemical, vinyl ester of branched fatty acid).

With regard to the copolymerization ratio of the ethylenically unsaturated group-containing carboxylic acid and other unsaturated compounds, the ethylenically unsaturated group-containing carboxylic acid is preferably 0.1 to 20

mole%, more preferably 0.5 to 15 mole%, and yet more preferably 1 to 10 mole%. When the ethylenically unsaturated group-containing carboxylic acid is at least 0.1 mole%, an amount of carboxyl group necessary for crosslinking, that is, the amount of (meth)acryloyl group that is converted from the carboxyl group by addition thereto, can be introduced into a resin. Furthermore, when the ethylenically unsaturated group-containing carboxylic acid is no greater than 50 mole%, the amount of carboxyl groups remaining when some are converted to (meth)acryloyl groups is appropriate, and the influence on water resistance, etc. is suppressed.

The carboxyl group-containing resin may be obtained by polymerizing the monomer by a known polymerization method such as solution polymerization, bulk polymerization, emulsion polymerization, or suspension polymerization in the presence or absence of a known radical polymerization initiator at a temperature of 100°C to 250°C, and solution polymerization and bulk polymerization are particularly preferable.

When solution polymerization is carried out, it is preferable to use an organic solvent that is to be used in a stage prior to an operation of suspension in water, which is described later. Preferred examples of the organic solvent include an aromatic hydrocarbon such as toluene or xylene, an aliphatic hydrocarbon such as hexane, heptane, or octane, an alicyclic hydrocarbon such as cyclohexane, a glycol ether such as propylene glycol monomethyl ether or dipropylene glycol monomethyl ether, a glycol ester such as ethylene glycol diacetate or propylene glycol monomethyl ether acetate, an ester such as ethyl acetate or butyl acetate, and a mixed solvent thereof. A water-soluble organic solvent is not suitable for use since it gives a problem with suspension in water.

The (meth)acryloyl group-containing (meth)acrylic resin is obtained by adding, to the carboxyl group of the terminal carboxyl group-containing (meth)acrylic copolymer obtained above, an epoxy group-containing (meth)acrylate such as 3,4-epoxycyclohexylmethyl (meth)acrylate or a lactone adduct thereof (Daicel Chemical Industries, Ltd., Cyclomer series, e.g. Cyclomer A200), glycidyl (meth)acrylate, or glycidoxybutyl (meth)acrylate to thus convert the carboxyl group into a (meth)acryloyl group.

The reaction for converting a carboxyl group into a (meth)acryloyl group is preferably carried out at a temperature that is no greater than the boiling point of a solvent. If an addition reaction were carried out at a temperature around the boiling point of the solvent, a large amount of dissolved oxygen would be released from the reaction solution, and the reaction system would attain an anaerobic atmosphere, which promotes a curing reaction of a reactive resin. It is also preferable to carry out the reaction at a temperature of no greater than 130°C, and particularly preferably 90°C to 130°C. It is preferable for it to be within this range since a practically sufficient reaction speed can be obtained and radical polymerization is suppressed.

It is preferable to carry out a reaction using a catalyst in order to obtain a sufficient reaction speed. Examples of the catalyst that can be used include tetraethylammonium chloride, a phosphine such as triphenylphosphine or tributylphosphine, an amine such as triethylamine or dimethylbenzylamine, and a sulfide such as dimethylsulfide, and tetraethylammonium chloride and a phosphine are preferable in terms of reaction speed.

In the reaction for converting a carboxyl group into a (meth)acryloyl group, in order to prevent polymerization of the (meth)acryloyl group a polymerization inhibitor may be used. The amount of polymerization inhibitor added is preferably 1 to 10,000 (hereinafter, on a mass basis) ppm relative to the resin formed, more preferably 100 to 5,000 ppm, and yet more preferably 200 to 1,000 ppm. When the amount of polymerization inhibitor is at least 1 ppm, the effect in inhibiting polymerization is sufficient, and when it is no greater than 10,000 ppm, any adverse influence on various physical properties of the product can be suppressed. For the same reason, it is preferable to carry out this reaction under an atmosphere of a gas containing molecular oxygen. The oxygen concentration is selected appropriately while taking safety into consideration.

(Component A-1-3) (Meth)acryloyl group-containing polyester resin that does not comprise ionic group

In the present invention, as Component A-1, (Component A-1-3) a (meth)acryloyl group-containing polyester resin that does not comprise an ionic group may be used.

Component A-1-3 comprises a (meth)acryloyl group, and the average number of (meth)acryloyl groups per molecule of Component A-1-3 is preferably at least 0.7. The average number of (meth)acryloyl groups is more preferably 0.8 to 20, and yet more preferably 1.2 to 10. It is preferable for the average number of (meth)acryloyl groups per molecule of Component A-1-3 to be within this range since a relief printing plate precursor and a relief printing plate that are obtained are excellent in terms of mechanical strength and durability.

Component A-1-3 may comprise a (meth)acryloyl group in a main chain or in a side chain, and although not particularly limited it preferably comprises a (meth)acryloyl group at a terminal of a main chain, and more preferably (meth)acryloyl groups at both termini of a main chain. It is preferable for it to comprise a (meth)acryloyl group at a main chain terminal since high reactivity due to high mobility of a main chain terminal is obtained and a film having high flexibility is obtained due to there being a long distance between crosslinked sites.

The (meth)acryloyl group-containing polyester resin may easily be synthesized by any of the known methods below.

Examples of the known methods include (1) a method in which a polyester resin comprising a terminal carboxyl group is synthesized from a polybasic acid such as adipic acid or phthalic acid or an anhydride thereof and a polyol such as ethylene glycol or trimethylolpropane, and the terminal carboxyl group is subsequently reacted with an epoxy group-containing (meth)acrylate to thus convert the terminal into a (meth)acryloyl group, (2) a method in which a polyester resin comprising a terminal hydroxy group is synthesized from the above polybasic acid and the above polyol, and is subsequently reacted with a (meth)acryloyl group-containing acid such as acrylic acid or methacrylic acid or an ester thereof to thus carry out esterification or an ester exchange reaction, thereby converting the terminal into a (meth)acryloyl group, (3) a method in which a polyester comprising a terminal hydroxy group is synthesized from the above polybasic acid and the above polyol and is subsequently reacted with a polyisocyanate such as hexamethylene diisocyanate to give a terminal isocyanate group-containing polyester resin, and this terminal isocyanate group is subsequently reacted with a hydroxy group-containing (meth)acrylate such as hydroxyethyl (meth)acrylate to thus convert the terminal to a (meth)acryloyl group, (4) a method in which a polyester compound obtained by adding a lactone compound (e.g. ε-caprolactone) to a hydroxyalkyl (meth)acrylate such as hydroxyethyl (meth)acrylate is reacted with a tri- or higher-valent acid anhydride such as trimellitic acid to thus synthesize a polyester resin comprising a terminal carboxyl group, and subsequently with an epoxy group-containing (meth)acrylate to thus convert the terminal into a (meth)acryloyl group, and (5) a method in which a polyester comprising a terminal carboxylic acid is synthesized from the above polybasic acid and the above polyol and reacted with a hydroxy group-containing (meth)acrylate compound such as hydroxyethyl (meth)acrylate or hydroxypropyl (meth)acrylate to thus convert the terminal to a (meth)acryloyl group.
Among methods (1) to (5) above, method (1) involving a polyester resin is easy and the most general, and is explained briefly below.
In method (1), examples of the epoxy group-containing (meth)acrylate that is to be reacted with the polyester resin comprising a terminal carboxyl group include, as in the case of the (meth)acryloyl group-containing (meth)acrylic resin, glycidyl (meth)acrylate, 3,4-epoxycyclohexylmethyl (meth)acrylate or a lactone adduct thereof (Daicel Chemical Industries, Ltd., Cyclomer series, e.g. Cyclomer A200, etc.), the mono(meth)acrylate of 3,4-epoxycyclohexylmethyl-3',4'-epoxycyclohexanecarboxylate (Daicel Chemical Industries, Ltd., Celloxide 2021), and glycidoxybutyl (meth)acrylate.
The reaction for converting a terminal carboxyl group of a polyester resin into a terminal (meth)acryloyl group in method (1) is carried out in the same manner as for the (meth)acryloyl group-containing (meth)acrylic resin.

(Component A-2) Compound that comprises ionic group, that comprises (meth)acryloyl group as crosslinkable group, and that is plastomer at 20°C

In the present invention, (Component A-2) a compound that comprises an ionic group, that comprises a (meth)acryloyl group as a crosslinkable group, and that is a plastomer at 20°C can be cited as an example of Component A.
A method for introducing an ionic group into a compound that is a plastomer at 20°C is not particularly limited; examples thereof include (i) a method in which a compound that comprises an acid group and that is a plastomer at 20°C is neutralized by a base, (ii) a method in which a compound that comprises a base and that is a plastomer at 20°C is neutralized by an acid group, and (iii) a method in which a monomer comprising an ionic group is polymerized. Among these methods, from the viewpoint of synthesis (i) or

(ii) is preferable, and (i) is more preferable.

In method (i), the compound that comprises an acid group (an anionic group or a group that can become an anionic group) and that is a plastomer at 20°C includes a compound that is a plastomer at 20°C obtained from an ethylenically unsaturated compound comprising an acid group and, if necessary, by copolymerization with another ethylenically unsaturated compound. Examples of the acid group include a carboxyl group, a phosphoric acid group, and a sulfonic acid group, and among them a carboxyl group is preferable.
As an example of the acid group-containing ethylenically unsaturated compound, a compound that comprises an ethylenically unsaturated group and at least one carboxyl group in the molecule is preferable, and specific examples include an $\alpha,\beta$-ethylenically unsaturated carboxylic acid such as acrylic acid, methacrylic acid, itaconic acid, maleic acid, crotonic acid, fumaric acid, or $\beta$-carboxylethyl acrylate. Among them, acrylic acid or methacrylic acid is particularly preferable.
Furthermore, ethylenically unsaturated compounds other the acid group-containing monomer are not particularly limited, but (meth)acrylic acid esters cited as examples for Component A-1-2 or another ethylenically unsaturated compound may be appropriately selected and used.
In method (i), the base is preferably an organic base and preferably an amino group-containing compound, and preferably has at least one (meth)acryloyl group at a terminal. This enables an ionic group and a (meth)acryloyl group as a crosslinkable group to be introduced into a compound that comprises an acid group and that is a plastomer at 20°C.

Specific examples include dimethylaminomethyl (meth)acrylate, diethylaminomethyl (meth)acrylate, dimethylaminoethyl (meth)acrylate, diethylaminoethyl (meth)acrylate, dimethylaminopropyl (meth)acrylate, *tert*-butylaminoethyl (meth)acrylate, ethyltrimethylammonium (meth)acrylate, 2-hydroxypropyltrimethylammonium (meth)acrylate, and *N*-acryloylpiperidine.

When a (meth)acryloyl group as a crosslinkable group is introduced into a compound that is a plastomer at 20°C, the (meth)acryloyl group can be introduced by using an ethylenically unsaturated group- and epoxy group-containing monomer as a copolymerization component, and reacting an epoxy group-containing polymer with (meth)acrylic acid.

In this case, a metal salt may be used as a base, and specific examples include zinc, magnesium, and calcium. Furthermore, an organic base is preferably selected from amino group-containing compounds as appropriate.

In method (ii), as the compound that comprises a base and that is a plastomer at 20°C, there can be cited as an example a compound that is a plastomer at 20°C obtained from an ethylenically unsaturated compound comprising a base by, if necessary, copolymerization with another ethylenically unsaturated compound.

Examples of the ethylenically unsaturated compound comprising a base include dimethylaminomethyl (meth)acrylate, diethylaminomethyl (meth)acrylate, dimethylaminoethyl (meth)acrylate, diethylaminoethyl (meth)acrylate, dimethylaminopropyl (meth)acrylate, *tert*-butylaminoethyl (meth)acrylate, dimethylaminoethyl (meth)acrylamide, dimethylaminopropyl (meth)acrylamide, ethyltrimethylammonium (meth)acrylate, 2-hydroxypropyltrimethylammonium (meth)acrylate, *N*-acryloylpiperidine, and vinylpyridine.

In method (ii), examples of the acid group include, as described above, a carboxyl group, a sulfonic acid group, and a phosphoric acid group, and among them, a carboxyl group is preferable. Furthermore, as the acid group, it is preferable for it to be one that comprises at least one (meth)acryloyl group at a terminal.

Specific examples include (meth)acrylic acid. This enables an ionic group and a (meth)acryloyl group to be introduced into a compound that comprises a base and that is a plastomer at 20°C.

When a (meth)acryloyl group as a crosslinkable group is introduced into a compound that is a plastomer at 20°C, the acid group is not particularly limited, and a compound comprising a carboxyl group, a sulfonic acid group, a phosphoric acid group, etc. may be appropriately selected and used.

Among them, Component A-2 is preferably a compound that is a plastomer at 20°C obtained by method (i), and more preferably a compound formed by neutralizing an acid group of a compound that is a plastomer at 20°C using as a base an amino compound comprising at least one (meth)acryloyl group at a terminal.

Specific examples of Component A-2 are listed below, but the present invention should not be construed as being limited by these compounds. The polymerization ratio of the compound that is a plastomer at 20°C is expressed as a molar ratio.

| | Acid group-containing plastomer | Neutralizing group | No. avg. Mw |
|---|---|---|---|
| a-1 | 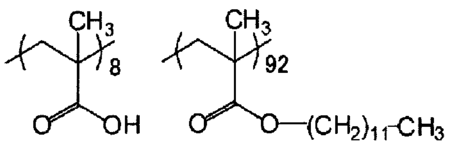 | 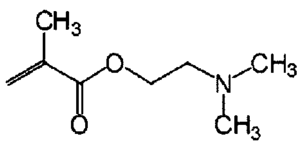 | 12,000 |
| a-2 | 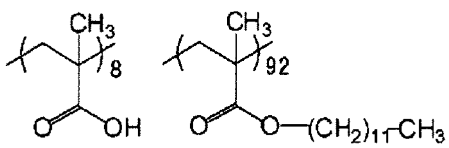 | 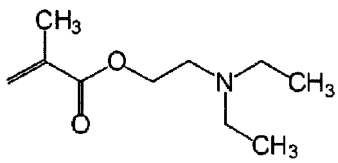 | 12, 000 |
| a-3 | 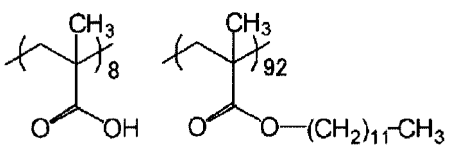 | 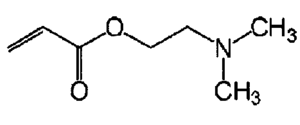 | 10, 000 |
| a-4 | 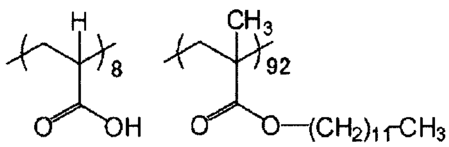 | 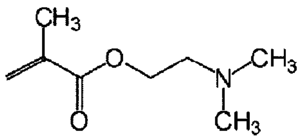 | 15, 000 |

(continued)

| | Acid group-containing plastomer | Neutralizing group | No. avg. Mw |
|---|---|---|---|
| a-5 | 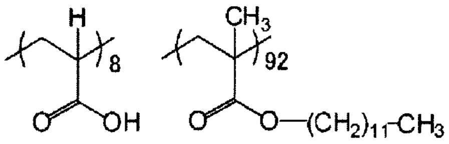 | 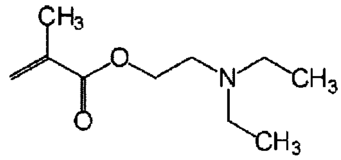 | 12, 000 |
| a-6 | 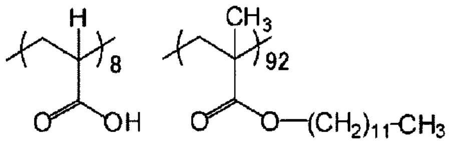 | 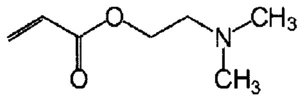 | 11, 000 |

A neutralizing base and an acid group (carboxyl group) in a compound that comprises an acid group and that is a plastomer at 20°C (an acid group-containing plastomer) form an ionic group, the acid group becoming a carboxylate ($-COO^-$), and the neutralizing base becoming an ammonium salt.

| | Base-containing plastomer | Neutralizing group | No. avg. Mw |
|---|---|---|---|
| a-7 | 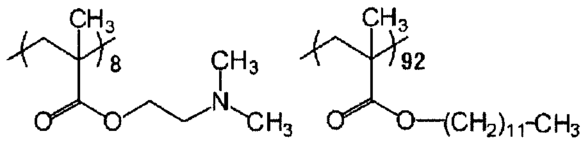 | 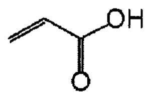 | 11, 000 |
| a-8 | 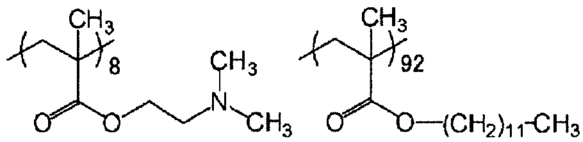 | 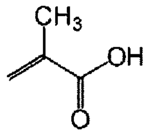 | 13, 000 |
| a-9 | 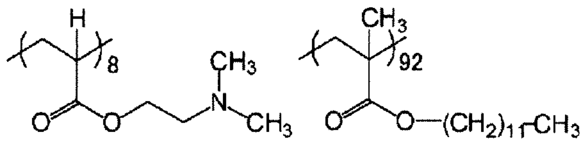 | 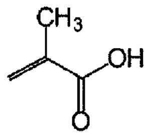 | 11, 000 |

A neutralizing acid group and an amino group in a compound that comprises a base and that is a plastomer at 20°C (a base-containing plastomer) form an ionic group, the base becoming an ammonium salt, and the acid group becoming a carboxylate ($-COO^-$).

Among them, preferred examples of Component A-2 include a-1, a-2, a-3, a-4, a-5, and a-6, and a-1, a-3, a-4, and a-6 are particularly preferable.

The average number of (meth)acryloyl groups per molecule of Component A-2 is preferably at least 0.7, more preferably 0.8 to 20, and yet more preferably 1.2 to 10. It is preferable for the average number of (meth)acryloyl groups per molecule to be within this range since a relief printing plate precursor and a relief printing plate that are obtained are excellent in terms of mechanical strength and durability.

The amount of ionic groups contained in Component A-2 is not particularly limited, but the monomer unit comprising an ionic group per molecule of the polymer is preferably 0.1 to 20 mole%, more preferably 0.5 to 15 mole%, and yet more preferably 1 to 10 mole%.

It is preferable for the content of ionic groups to be within this range since a balance can be achieved between ink resistance and film flexibility.

In the present invention, with regard to Component A, one type thereof may be used on its own or two or more types may be used in combination.

In the resin composition for laser engraving of the present invention, the content of Component A is preferably 1 to 99 mass% in the entire solids content, more preferably 10 to 90 mass%, yet more preferably 30 to 80 mass%, particularly preferably 50 to 80 mass%, and most preferably 60 to 80 mass%. The 'solids content' referred to here means components other than volatile components such as solvent in the resin composition for laser engraving.

It is preferable for the content of Component A to be within this range since a film having high ink resistance,

toughness, and high flexibility is obtained.

(Component B) Crosslinking agent

The resin composition for laser engraving of the present invention comprises (Component B) a crosslinking agent in order to form a crosslinked structure in a relief-forming layer to thus make a crosslinked relief-forming layer. The crosslinking agent (Component B) that can be used in the present invention is a compound comprising two or more crosslinkable groups per molecule, the crosslinkable group comprising at least one (meth)acryloyl group.

Examples of other crosslinkable groups include a hydrolyzable silyl group, a silanol group, and a vinyl group.

Component B preferably has a molecular weight (number-average molecular weight when there is a molecular weight distribution) of less than 3,000, more preferably 150 to 2,800, and yet more preferably 160 to 2,500. When the molecular weight of Component B is within this range, it is effective in forming crosslinking.

Examples of Component B include (Component B-1) a crosslinking agent that does not comprise an ionic group and (Component B-2) a crosslinking agent that comprises an ionic group.

Each thereof is explained below.

(Component B-1) Crosslinking agent that does not comprise ionic group

In the present invention, examples of Component B include (Component B-1) a crosslinking agent that does not comprise an ionic group. Component B-1 comprises two or more crosslinkable groups per molecule, the crosslinkable group comprising at least one (meth)acryloyl group.

Specific examples of Component B-1 that comprises two or more (meth)acryloyl groups include ethylene glycol di(meth)acrylate, triethylene glycol di(meth)acrylate, 1,3-butanediol di(meth)acrylate, tetramethylene glycol di(meth)acrylate, propylene glycol di(meth)acrylate, neopentyl glycol di(meth)acrylate, trimethylolpropane tri(meth)acrylate, trimethylolpropane tri((meth)acryloyloxypropyl) ether, trimethylolethane tri(meth)acrylate, hexanediol di(meth)acrylate, 1,4-cyclohexanediol di(meth)acrylate, tetraethylene glycol di(meth)acrylate, pentaerythritol di(meth)acrylate, pentaerythritol tri(meth)acrylate, pentaerythritol tetra(meth)acrylate, dipentaerythritol di(meth)acrylate, dipentaerythritol hexa(meth)acrylate, sorbitol tri(meth)acrylate, sorbitol tetra(meth)acrylate, sorbitol penta(meth)acrylate, sorbitol hexa(meth)acrylate, tri((meth)acryloyloxyethyl) isocyanurate, bis[*p*-(3-(meth)acryloxy-2-hydroxypropoxy)phenyl]dimethylmethane, bis[*p*-((meth)acryloxyethoxy)phenyl]dimethylmethane, hydrogenated bisphenol A di(meth)acrylate, hydrogenated bisphenol F di(meth)acrylate, a di(meth)acrylate of an ethylene oxide adduct of bisphenol A, a di(meth)acrylate of a propylene oxide adduct of bisphenol A, a di(meth)acrylate of an ethylene oxide adduct of bisphenol F, a di(meth)acrylate of a propylene oxide adduct of bisphenol F, a di(meth)acrylate of an ethylene oxide adduct of hydrogenated bisphenol A, and a di(meth)acrylate of a propylene oxide adduct of hydrogenated bisphenol A.

Among them a compound having two or three (meth)acryloyl groups per molecule is preferable, and specific examples thereof include ethylene glycol di(meth)acrylate, triethylene glycol di(meth)acrylate, 1,3-butanediol di(meth)acrylate, tetramethylene glycol di(meth)acrylate, propylene glycol di(meth)acrylate, neopentyl glycol di(meth)acrylate, trimethylolpropane tri(meth)acrylate, trimethylolpropane tri((meth)acryloyloxypropyl) ether, trimethylolethane tri(meth)acrylate, hexanediol di(meth)acrylate, 1,4-cyclohexanediol di(meth)acrylate, tetraethylene glycol di(meth)acrylate, pentaerythritol di(meth)acrylate, pentaerythritol tri(meth)acrylate, dipentaerythritol di(meth)acrylate, sorbitol tri(meth)acrylate, tri((meth)acryloyloxyethyl) isocyanurate, bis[*p*-(3-(meth)acryloxy-2-hydroxypropoxy)phenyl]dimethylmethane, bis[p-((meth)acryloxyethoxy)phenyl]dimethylmethane, hydrogenated bisphenol A di(meth)acrylate, hydrogenated bisphenol F di(meth)acrylate, a di(meth)acrylate of an ethylene oxide adduct of bisphenol A, a di(meth)acrylate of a propylene oxide adduct of bisphenol A, a di(meth)acrylate of an ethylene oxide adduct of bisphenol F, a di(meth)acrylate of a propylene oxide adduct of bisphenol F, a di(meth)acrylate of an ethylene oxide adduct of hydrogenated bisphenol A, and a di(meth)acrylate of a propylene oxide adduct of hydrogenated bisphenol A, and among them ethylene glycol di(meth)acrylate, triethylene glycol di(meth)acrylate, 1,3-butanediol di(meth)acrylate, tetramethylene glycol di(meth)acrylate, propylene glycol di(meth)acrylate, neopentyl glycol di(meth)acrylate, trimethylolpropane tri(meth)acrylate, hexanediol di(meth)acrylate, tetraethylene glycol di(meth)acrylate are particularly preferable.

A compound having a hydrohyzable silyl group and/or silanol group, and a (meth)acryloyl group may be used as Component B-2.

Here, the ’hydrolyzable silyl group’ is a silyl group having hydrolyzability. Examples of the hydrolyzable group include an alkoxy group, a mercapto group, a halogen atom, an amide group, an acetoxy group, an amino group, and an isopropenoxy group. A silyl group undergoes hydrolysis to become a silanol group, and a silanol group undergoes dehydration-condensation to form a siloxane bond. Such a hydrolyzable silyl group and/or silanol group is preferably one represented by Formula (B2-1).

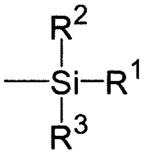

(B2-1)

In Formula (B2-1), at least one of $R^1$ to $R^3$ denotes a hydrolyzable group selected from the group consisting of an alkoxy group, a mercapto group, a halogen atom, an amide group, an acetoxy group, an amino group, and an isopropenoxy group, or a hydroxy group. The remainder of $R^1$ to $R^3$ independently denotes a hydrogen atom, a halogen atom or a monovalent organic substituent (examples including an alkyl group, an aryl group, an alkenyl group, an alkynyl group, and an aralkyl group).

In Formula (B2-1) above, the hydrolyzable group bonded to the silicon atom is particularly preferably an alkoxy group or a halogen atom, and more preferably an alkoxy group. From the viewpoint of rinsing properties and printing durability, the alkoxy group is preferably an alkoxy group having 1 to 30 carbon atoms, more preferably an alkoxy group having 1 to 15 carbon atoms, yet more preferably an alkoxy group having 1 to 5 carbon atoms, particularly preferably an alkoxy group having 1 to 3 carbon atoms, and most preferably a methoxy group or an ethoxy group. Furthermore, examples of the halogen atom include an F atom, a Cl atom, a Br atom, and an I atom, and from the viewpoint of ease of synthesis and stability it is preferably a Cl atom or a Br atom, and more preferably a Cl atom.

Specific preferred examples of the alkoxy group as the hydrolysable group include a methoxy group, an ethoxy group, a propoxy group, an isopropoxy group, a butoxy group, a *tert*-butoxy group, a phenoxy group, and a benzyloxy group. A plurality of each of these alkoxy groups may be used in combination, or a plurality of different alkoxy groups may be used in combination.

Examples of the alkoxysilyl group having an alkoxy group bonded thereto include a trialkoxysilyl group such as a trimethoxysilyl group, a triethoxysilyl group, a triisopropoxysilyl group, or a triphenoxysilyl group; a dialkoxymonoalkylsilyl group such as a dimethoxymethylsilyl group or a diethoxymethylsilyl group; and a monoalkoxydialkylsilyl group such as a methoxydimethylsilyl group or an ethoxydimethylsilyl group.

Specific compound examples include 3-(meth)acryloxypropylmethyldimethoxysilane, 3-(meth)acryloxypropyltrimethoxysilane, 3-(meth)acryloxypropylmethyldiethoxysilane, 3-(meth)acryloxypropyltriethoxysilane, *O*-((meth)acryloxyethyl)-*N*-(triethoxysilylpropyl)carbamate, *N*-(3-(meth)acryloxy-2-hydroxypropyl)-3-aminopropyltriethoxysilane, ((meth)acryloxymethyl)methyldiethoxysilane, ((meth)acryloxymethyl)methyldimethoxysilane, (meth)acryloxymethyltriethoxysilane, and (meth)acryloxymethyltrimethoxysilane.

Component B-1 is preferably a compound comprising two or more (meth)acryloyl groups as crosslinkable groups, more preferably a compound comprising two or three (meth)acryloyl groups, and yet more preferably a compound comprising only (meth)acryloyl groups as crosslinkable groups.

(Component B-2) Crosslinking agent that comprises ionic group

Examples of Component B include (Component B-2) a crosslinking agent that comprises an ionic group.

Component B-2 comprises two or more crosslinkable groups, the crosslinkable group comprising at least one (meth)acryloyl group, and comprises an ionic group.

As a method for introducing an ionic group into Component B-2, a method in which a (meth)acrylic acid is neutralized with a base is preferable. Examples of the base include a metal salt, a hydrolyzable silyl group- and/or silanol group-containing base, and a (meth)acryloyl group-containing base.

Examples of the (meth)acryloyl group-containing base include *N,N*-dimethylaminoethyl (meth)acrylate, *N,N*-diethylaminoethyl (meth)acrylate, *N,N*-diethylaminoethyl (meth)acrylate, *N,N*-dimethylaminoethyl (meth)acrylate, *N,N*-dimethylaminopropyl (meth)acrylate, and *N,N*-diethylaminopropyl (meth)acrylate.

Examples of the hydrolyzable silyl group- and/or silanol group-containing base include an amine-based silane coupling agent such as 3-aminopropyldiethoxymethylsilane, 3-aminopropyltriethoxysilane, 3-(2-aminoethyl)aminopropyltrimethoxysilane, 3-(2-aminoethyl)aminopropylmethyldimethoxysilane, 3-aminopropyltrimethoxysilane, 3-phenylaminopropyltrimethoxysilane, 3-aminopropyldiethoxymethylsilane, 4-aminobutyltriethoxysilane, 4-amino-3,3-dimethylbutyltrimethoxysilane, *N*-(2-aminoethyl)-3-aminoisobutylmethyldimethoxysilane, or (aminoethylaminomethyl)phenethyltrimethoxysilane.

Examples of the metal salt include a salt of a di- or higher-valent metal, and preferred specific examples include zinc, magnesium, aluminum, calcium, and neodymium. Among them, from the viewpoint of solubility, zinc, magnesium, and aluminum are more preferable, and zinc is yet more preferable.

Component B-2 is preferably an ammonium derivative salt of (meth)acrylic acid or a metal salt of (meth)acrylic acid, and more preferably a metal salt of (meth)acrylic acid. The metal salt of (meth)acrylic acid is preferably zinc (meth)acrylate, magnesium (meth)acrylate, or aluminum (meth)acrylate, and particularly preferably zinc (meth)acrylate.

It is preferable to use as Component B-2 a metal salt of (meth)acrylic acid since engraving sensitivity improves.

With regard to Component B, one type thereof may be used on its own or two or more types may be used in combination. The content of Component B in the resin composition for laser engraving is preferably 1 to 70 mass% of the entire solids content, more preferably 5 to 60 mass%, and yet more preferably 10 to 40 mass%.

In the resin composition for laser engraving of the present invention, at least either one of Component A and Component B comprises an ionic group. From the viewpoint of ease of introducing an ionic group, it is preferable for Component B to comprise an ionic group, and it is more preferable for Component B to comprise an ionic group and for Component A not to comprise an ionic group.

The resin composition for laser engraving of the present invention comprises Component A and Component B as essential components and may comprise another component. Examples of the other component include (Component C) a photothermal conversion agent, (Component D) a polymerization initiator, (Component E) a filler, (Component F) a binder polymer, and (Component G) a solvent.

(Component C) Photothermal conversion agent

The resin composition for laser engraving of the present invention preferably further comprises (Component C) a photothermal conversion agent. It is surmised that the photothermal conversion agent in the present invention absorbs laser light and generates heat thus promoting thermal decomposition of a cured material during laser engraving. Because of this, it is preferable to select a photothermal conversion agent that absorbs light having the wavelength of the laser that is used for engraving.

When a laser (a YAG laser, a semiconductor laser, a fiber laser, a surface emitting laser, etc.) emitting infrared at a wavelength of 700 nm to 1,300 nm is used as a light source for laser engraving the crosslinked relief-forming layer of the relief printing plate precursor for laser engraving of the present invention, the photothermal conversion agent is preferably a photothermal conversion agent that can absorb light having a wavelength of 700 nm to 1,300 nm, and more preferably a photothermal conversion agent that has a maximum absorbing wavelength of 700 nm to 1,300nm.

As the photothermal conversion agent that can be used in the present invention, various types of dye or pigment are used.

With regard to the photothermal conversion agent, examples of dyes that can be used include commercial dyes and known dyes described in publications such as 'Senryo Binran' (Dye Handbook) (Ed. by The Society of Synthetic Organic Chemistry, Japan, 1970). Specific preferable examples include dyes having a maximum absorption wavelength from 700 nm to 1,300 nm, and such preferable examples include azo dyes, metal complex salt azo dyes, pyrazolone azo dyes, naphthoquinone dyes, anthraquinone dyes, phthalocyanine dyes, carbonium dyes, diimmonium compounds, quinone imine dyes, methine dyes, cyanine dyes, squarylium colorants, pyrylium salts, and metal thiolate complexes.

In particular, cyanine-based colorants such as heptamethine cyanine colorants, oxonol-based colorants such as pentamethine oxonol colorants, phthalocyanine-based colorants, and dyes described in paragraphs 0124 to 0137 of JP-A-2008-63554 are preferably used.

With regard to the photothermal conversion agent used in the present invention, examples of pigments include commercial pigments and pigments described in the Color Index (C.I.) Handbook, 'Saishin Ganryo Binran' (Latest Pigments Handbook) (Ed. by Nippon Ganryo Gijutsu Kyokai, 1977), 'Saisin Ganryo Ouyogijutsu' (Latest Applications of Pigment Technology) (CMC Publishing, 1986), 'Insatsu Inki Gijutsu' (Printing Ink Technology) CMC Publishing, 1984).

Examples of the type of pigment include black pigments, yellow pigments, orange pigments, brown pigments, red pigments, violet pigments, blue pigments, green pigments, fluorescent pigments, metal powder pigments, and other polymer-bonding colorants. Specific examples include insoluble azo pigments, azo lake pigments, condensed azo pigments, chelate azo pigments, phthalocyanine-based pigments, anthraquinone-based pigments, perylene and perinone-based pigments, thioindigo-based pigments, quinacridone-based pigments, dioxazine-based pigments, isoindolinone-based pigments, quinophthalone-based pigments, dyed lake pigments, azine pigments, nitroso pigments, nitro pigments, natural pigments, fluorescent pigments, inorganic pigments, and carbon black. Among these pigments, carbon black is preferable.

Any carbon black, regardless of classification by ASTM and application (e.g. for coloring, for rubber, for dry cell, etc.), may be used as long as dispersibility, etc. in the composition is stable. Carbon black includes for example furnace black, thermal black, channel black, lamp black, and acetylene black. In order to make dispersion easy, a black colorant such as carbon black may be used as color chips or a color paste by dispersing it in nitrocellulose or a binder in advance using, as necessary, a dispersant, and such chips and paste are readily available as commercial products.

In the present invention, it is possible to use carbon black having a relatively low specific surface area and a relatively low DBP (dibutyl phthalate) absorption and also finely divided carbon black having a large specific surface area. Preferred examples of carbon black include Printex (registered trademark) U, Printex (registered trademark) A, Spezialschwarz (registered trademark) 4 (Degussa), and #45L (Mitsubishi Chemical Corporation).

The carbon black that can be used in the present invention has preferably a dibutyl phthalate (DBP) absorption

number of less than 150 mL/100 g, more preferably no greater than 100 mL/100 g, and yet more preferably no greater than 70 mL/100 g.

From the viewpoint of improving engraving sensitivity by efficiently transmitting heat generated by photothermal conversion to the surrounding polymer, etc., the carbon black is preferably a conductive carbon black having a specific surface area of at least 100 $m^2$/g.

Component C in the resin composition for laser engraving of the present invention may be used singly or in a combination of two or more compounds.

The content of the photothermal conversion agent (Component C) in the resin composition for laser engraving of the present invention largely depends on the size of the molecular extinction coefficient characteristic to the molecule, and is preferably 0.01 to 20 mass% relative to the total solids content of the resin composition, more preferably 0.05 to 10 mass%, and yet more preferably 0.1 to 5 mass%.

(Component D) Polymerization initiator

The resin composition for laser engraving of the present invention comprises (Component D) a polymerization initiator in order to accelerate the formation of cross-linking structure.

With regard to the polymerization initiator, one known to a person skilled in the art may be used without any limitations. Radical polymerization initiators, which are preferred polymerization initiators, are explained in detail below, but the present invention should not be construed as being limited to these descriptions.

In the present invention, preferable polymerization initiators include (a) aromatic ketones, (b) onium salt compounds, (c) organic peroxides, (d) thio compounds, (e) hexaallylbiimidazole compounds, (f) ketoxime ester compounds, (g) borate compounds, (h) azinium compounds, (i) metallocene compounds, (j) active ester compounds, (k) compounds having a carbon halogen bond, and (l) azo compounds. Hereinafter, although specific examples of the (a) to (l) are cited, the present invention is not limited to these.

In the present invention, when applies to the relief-forming layer of the relief printing plate precursor, from the viewpoint of engraving sensitivity and making a favorable relief edge shape, (c) organic peroxides and (l) azo compounds are more preferable, and (c) organic peroxides are particularly preferable.

The (a) aromatic ketones, (b) onium salt compounds, (d) thio compounds, (e) hexaallylbiimidazole compounds, (f) ketoxime ester compounds, (g) borate compounds, (h) azinium compounds, (i) metallocene compounds, (j) active ester compounds, and (k) compounds having a carbon halogen bonding may preferably include compounds described in paragraphs 0074 to 0118 of JP-A-2008-63554.

Moreover, (c) organic peroxides and (l) azo compounds preferably include the following compounds.

(c) Organic peroxide

Preferred examples of the organic peroxide (c) as a radically polymerization initiator that can be used in the present invention include peroxyester-based ones such as 3,3',4,4'-tetra(*t*-butylperoxycarbonyl)benzophenone, 3,3',4,4'-tetra(*t*-amylperoxycarbonyl)benzophenone, 3,3',4,4'-tetra(*t*-hexylperoxycarbonyl)benzophenone, 3,3',4,4'-tetra(*t*-octylperoxycarbonyl)benzophenone, 3,3',4,4'-tetra(cumylperoxycarbonyl)benzophenone, 3,3',4,4'-tetra(*p*-isopropylcumylperoxycarbonyl)benzophenone, di-*t*-butyldiperoxyisophthalate, and *t*-butylperoxybenzoate.

(l) Azo compounds

Preferable (l) azo compounds as a radically polymerization initiator that can be used in the present invention include those such as 2,2'-azobisisobutyronitrile, 2,2'-azobispropionitrile, 1,1'-azobis(cyclohexane-1-carbonitrile), 2,2'-azobis(2-methylbutyronitrile), 2,2'-azobis(2,4-dimethylvaleronitrile), 2,2'-azobis(4-methoxy-2,4-dimethylvaleronitrile), 4,4'-azobis(4-cyanovaleric acid), dimethyl 2,2'-azobis(isobutyrate), 2,2'-azobis(2-methylpropionamideoxime), 2,2'-azobis[2-(2-imidazolin-2-yl)propane], 2,2'-azobis{2-methyl-*N*-[1,1-bis(hydroxymethyl)-2-hydroxyethyl]propionamide}, 2,2'-azobis[2-methyl-*N*-(2-hydroxyethyl)propionamide], 2,2'-azobis(*N*-butyl-2-methylpropionamide), 2,2'-azobis(*N*-cyclohexyl-2-methylpropionamide), 2,2'-azobis[*N*-(2-propenyl)-2-methyl-propionamide], 2,2'-azobis(2,4,4-trimethylpentane).

It has been found that in the present invention the organic peroxide (c) above is preferable as a polymerization initiator in the present invention from the viewpoint of the crosslinkablility of the film (relief-forming layer).

In the present invention, the thermopolymerization initiator may be used singly or in a combination of two or more compounds.

In the present invention, the content of Component D in the resin composition for laser engraving of the present invention is preferably 0.01 to 20 mass% relative to the total mass of the solids content, more preferably 0.05 to 10 mass%, and yet more preferably 0.10 to 7 mass%.

It is preferable for the content of Component D to be in this range since the printing durability is good.

(Component E) Filler

The resin composition for laser engraving of the present invention may comprise (Component E) a filler in order to improve the physical properties of a cured film of the resin composition for laser engraving.
As the filler, a known filler may be used, and examples thereof include inorganic particles and organic resin particles.
As the inorganic particles, known particles may be used, and examples thereof include carbon nanotubes, fullerene, graphite, silica, alumina, aluminum, and calcium carbonate.
As the organic resin particles, known particles may be used, and preferred examples thereof include thermally expandable microcapsules.
As the thermally expandable microcapsules, EXPANCEL (Akzo Noble) can be cited.
The resin composition for laser engraving of the present invention may employ only one type of Component E or two or more types in combination.
The content of the filler (Component E) in the resin composition for laser engraving of the present invention is preferably 0.01 to 20 mass% relative to the total solids content of the resin composition, more preferably 0.05 to 10 mass%, and particularly preferably 0.1 to 5 mass%.

(Component F) Binder polymer

The resin composition for laser engraving of the present invention may comprise (Component F) a binder polymer (hereinafter, also called simply a 'binder polymer') that is a resin component other than Component A, but the content thereof is preferably less than the content of Component A, more preferably no greater than 50 mass% of the content of Component A, yet more preferably no greater than 10 mass%, and particularly preferably none, that is, the binder polymer (Component F) being not contained.
The binder polymer is a polymer component contained in the resin composition for laser engraving; a usual polymer compound is appropriately selected, and one type may be used on its own or two or more types may be used in combination. In particular, when the resin composition for laser engraving is used in a printing plate precursor, it is preferably selected while taking into consideration various aspects of performance such as laser engraving properties, ink acceptance/transfer, and engraving residue dispersibility.
Examples of the binder polymer include binder polymers described in paragraphs 0009 to 0030 of JP-A-2012-045801.
The resin composition for laser engraving of the present invention may employ only one type of Component F or two or more types in combination.

(Component G) Solvent

The resin composition for laser engraving of the present invention may comprise a solvent (Component G).
From the viewpoint of dissolving each of the components, a solvent which is used when the resin composition for laser engraving of the present invention is prepared is preferably mainly an aprotic organic solvent. More specifically, solvents are used preferably at aprotic organic solvent/protic organic solvent = 100/0 to 50/50 (ratio by mass), more preferably 100/0 to 70/30, and particularly preferably 100/0 to 90/10.
Specific preferred examples of the aprotic organic solvent include acetonitrile, tetrahydrofuran, dioxane, toluene, propylene glycol monomethyl ether acetate, methyl ethyl ketone, acetone, methyl isobutyl ketone, ethyl acetate, butyl acetate, ethyl lactate, *N,N*-dimethylacetamide, *N*-methylpyrrolidone, and dimethyl sulfoxide.
Specific preferred examples of the protic organic solvent include methanol, ethanol, 1-propanol, 2-propanol, 1-butanol, 1-methoxy-2-propanol, ethylene glycol, diethylene glycol, and 1,3-propanediol.
Among them, propylene glycol monomethyl ether acetate is preferable.

<Other additives>

To the resin composition for laser engraving of the present invention, additives other than Component A to Component G may be added suitably in a range that does not hinder the effect of the present invention. Examples thereof include a thickener, a surfactant, a wax, a process oil, a metal oxide, an ozone decomposition inhibitor, an antioxidant, a thermal polymerization inhibitor, a colorant, a fragrance, an alcohol exchange reaction catalyst, etc. With regard to these additives, only one type may be used or two or more types may be used in combination.
The resin composition for laser engraving of the present invention preferably comprises a fragrance in order

to reduce odor. A fragrance is effective in reducing odor during production of a relief printing plate precursor or during laser engraving. Examples of the fragrance include fragrances described in paragraphs 0081 to 0089 of JP-A-2011-245818.

The resin composition for laser engraving of the present invention may comprise, as an additive for improving engraving sensitivity, nitrocellulose or a high thermal conductivity material.

Since nitrocellulose is a self-reactive compound, it generates heat during laser engraving, thus assisting thermal decomposition of a coexisting binder polymer such as Component A. It is surmised that as a result, the engraving sensitivity improves.

A high thermal conductivity material is added for the purpose of assisting heat transfer, and examples of thermally conductive materials include inorganic compounds such as metal particles and organic compounds such as a conductive polymer. As the metal particles, fine gold particles, fine silver particles, and fine copper particles having a particle diameter of on the order of a micrometer to a few nanometers are preferable. As the conductive polymer, a conjugated polymer is particularly preferable, and specific examples thereof include polyaniline and polythiophene.

Moreover, the use of a cosensitizer can furthermore improve the sensitivity in curing the resin composition for laser engraving with light.

Furthermore, a small amount of thermal polymerization inhibitor is added preferably for the purpose of hindering unnecessary thermal polymerization of a polymerizable compound during the production or storage of the composition.

(Relief printing plate precursor for laser engraving)

A first embodiment of the relief printing plate precursor for laser engraving of the present invention comprises a relief-forming layer formed from the resin composition for laser engraving of the present invention.

A second embodiment of the relief printing plate precursor for laser engraving of the present invention comprises a crosslinked relief-forming layer formed by crosslinking a relief-forming layer formed from the resin composition for laser engraving of the present invention.

In the present invention, the 'relief printing plate precursor for laser engraving' means both or one of a precursor having a crosslinkable relief-forming layer formed from the resin composition for laser engraving in a state before being crosslinked and a precursor in a state in which the layer is cured by light or heat.

In the present invention, the 'relief-forming layer' means a layer in a state before being crosslinked, that is, a layer formed from the resin composition for laser engraving of the present invention, which may be dried as necessary.

The 'relief printing plate' can be obtained by laser engraving the printing plate precursor having a crosslinked relief-forming layer.

In the present invention, the 'crosslinked relief-forming layer' means a layer formed by crosslinking the relief-forming layer. The crosslinking is carried out by means of heat and/or light. Furthermore, the crosslinking is not particularly limited as long as it is a reaction by which the resin composition is cured, and is a concept that includes a structure crosslinked due to a reaction between Components A, between Components B, between Component A and Component B, and between Component B and other component.

Moreover, in the present invention, the 'relief layer' means a layer of the relief printing plate formed by engraving using a laser, that is, the crosslinked relief-forming layer after laser engraving.

The relief printing plate precursor for laser engraving of the present invention has a relief-forming layer formed from a resin composition for laser engraving comprising the above-mentioned components. The (crosslinked) relief-forming layer is preferably provided above a support.

The relief printing plate precursor for laser engraving may further comprise, as necessary, an adhesive layer between the support and the (crosslinked) relief-forming layer and, above the (crosslinked) relief-forming layer, a slip coat layer and a protection film.

<Relief-forming layer>

The relief-forming layer is a layer formed from the resin composition for laser engraving of the present invention and is preferably a thermally crosslinkable layer.

As a mode in which a relief printing plate is prepared using the relief printing plate precursor for laser engraving, a mode in which a relief printing plate is prepared by crosslinking a relief-forming layer to thus form a relief printing plate precursor having a crosslinked relief-forming layer, and the crosslinked relief-forming layer (hard relief-forming layer) is then laser-engraved to thus form a relief layer is preferable. By crosslinking the relief-forming layer, it is possible to prevent abrasion of the relief layer during printing, and it is possible to obtain a relief printing plate having a relief layer with a sharp shape after laser engraving.

The relief-forming layer may be formed by molding the resin composition for laser engraving that has the above-mentioned components for a relief-forming layer into a sheet shape or a sleeve shape. The relief-forming layer is usually

provided above a support, which is described later, but it may be formed directly on the surface of a member such as a cylinder of equipment for plate making or printing or may be placed and immobilized thereon, and a support is not always required.

A case in which the relief-forming layer is mainly formed in a sheet shape is explained as an Example below.

<Support>

A material used for the support of the relief printing plate precursor for laser engraving is not particularly limited, but one having high dimensional stability is preferably used, and examples thereof include metals such as steel, stainless steel, or aluminum, plastic resins such as a polyester (e.g. polyethylene terephthalate (PET), or polybutylene terephthalate (PBT)), polyacrylonitrile (PAN) or polyvinyl chloride, synthetic rubbers such as styrene-butadiene rubber, and glass fiber-reinforced plastic resins (epoxy resin, phenolic resin, etc.). As the support, a PET film or a steel substrate is preferably used. The configuration of the support depends on whether the relief-forming layer is in a sheet shape or a sleeve shape.

<Adhesive layer>

An adhesive layer may be provided between the relief-forming layer and the support for the purpose of strengthening the adhesion between the two layers. Examples of materials (adhesives) that can be used in the adhesive layer include those described in 'Handbook of Adhesives', Second Edition, Ed by I. Skeist, (1977).

<Protection film, slip coat layer>

For the purpose of preventing scratches or dents in the relief-forming layer surface or the crosslinked relief-forming layer surface, a protection film may be provided on the relief-forming layer surface or the crosslinked relief-forming layer surface. The thickness of the protection film is preferably 25 to 500 $\mu$m, and more preferably 50 to 200 $\mu$m. The protection film may employ, for example, a polyester-based film such as PET or a polyolefin-based film such as PE (polyethylene) or PP (polypropylene). The surface of the film may be made matte. The protection film is preferably peelable.

When the protection film is not peelable or conversely has poor adhesion to the relief-forming layer, a slip coat layer may be provided between the two layers. The material used in the slip coat layer preferably employs as a main component a resin that is soluble or dispersible in water and has little tackiness, such as polyvinyl alcohol, polyvinyl acetate, partially saponified polyvinyl alcohol, a hydroxyalkylcellulose, an alkylcellulose, or a polyamide resin.

(Process for producing relief printing plate precursor for laser engraving)

The process for producing a relief printing plate precursor for lase engraving is not particularly limited, and examples thereof include a method in which the resin composition for laser engraving is prepared, solvent is removed from as necessary this coating solution composition for laser engraving, and it is melt-extruded onto a support. Alternatively, a method may be employed in which the resin composition for laser engraving is cast onto a support, and this is dried in an oven to thus remove solvent from the resin composition.

Among them, the process for producing a relief printing plate precursor for laser engraving of the present invention is preferably a production process comprising a layer formation step of forming a relief-forming layer from the resin composition for laser engraving of the present invention and a crosslinking step of crosslinking the relief-forming layer by means of heat and/or light to thus obtain a relief printing plate precursor having a crosslinked relief-forming layer.

Subsequently, as necessary, a protection film may be laminated on the (crosslinked) relief-forming layer. Laminating may be carried out by compression-bonding the protection film and the relief-forming layer by means of heated calendar rollers, etc. or putting a protection film into intimate contact with a relief-forming layer whose surface is impregnated with a small amount of solvent.

When a protection film is used, a method in which a relief-forming layer is first layered on a protection film and a support is then laminated may be employed.

When an adhesive layer is provided, it may be dealt with by use of a support coated with an adhesive layer. When a slip coat layer is provided, it may be dealt with by use of a protection film coated with a slip coat layer.

<Layer formation step>

The process for producing a relief printing plate precursor for laser engraving of the present invention preferably comprises a layer formation step of forming a relief-forming layer from the resin composition for laser engraving of the present invention.

Preferred examples of a method for forming the relief-forming layer include a method in which the resin composition for laser engraving of the present invention is prepared, solvent is removed as necessary from this resin composition for laser engraving, and it is then melt-extruded onto a support and a method in which the resin composition for laser engraving of the present invention is prepared, the resin composition for laser engraving of the present invention is cast onto a support, and this is dried in an oven to thus remove solvent.

The resin composition for laser engraving may be produced by, for example, dissolving or dispersing Component A and Component B, and as optional components Component C to Component G, etc. in an appropriate solvent, and then mixing the solution. Since it is preferably to remove most of the solvent component in a stage of producing a relief printing plate precursor, it is preferable to use as the solvent a volatile low-molecular-weight alcohol (e.g. methanol, ethanol, *n*-propanol, isopropanol, propylene glycol monomethyl ether), etc., and adjust the temperature, etc. to thus reduce as much as possible the total amount of solvent to be added.

The thickness of the (crosslinked) relief-forming layer in the relief printing plate precursor for laser engraving before and after crosslinking is preferably at least 0.05 mm but no greater than 10 mm, more preferably at least 0.05 mm but no greater than 7 mm, and yet more preferably at least 0.05 mm but no greater than 3 mm.

<Crosslinking step>

The process for producing a relief printing plate precursor for laser engraving of the present invention is preferably a production process that comprises a crosslinking step of crosslinking the relief-forming layer by means of heat and/or light to thus obtain a relief printing plate precursor having a crosslinked relief-forming layer.

The relief-forming layer may be crosslinked by heating the relief printing plate precursor for laser engraving (step of crosslinking by means of heat). As heating means for carrying out crosslinking by heat, there can be cited a method in which a printing plate precursor is heated in a hot air oven or a far-infrared oven for a predetermined period of time and a method in which it is put into contact with a heated roller for a predetermined period of time.

Due to the relief-forming layer being thermally crosslinked, firstly, a relief formed after laser engraving becomes sharp and, secondly, tackiness of engraving residue formed during laser engraving is suppressed.

In the present invention, in the crosslinking step, polymerization reactions between Components A, and between Component A and Component B carry out.

In addition, since by using a photopolymerization initiator or the like, the polymerizable compound is polymerized to form a crosslink, the crosslinking may be further carried out by means of light.

When the relief-forming layer comprises a photopolymerization initiator, the relief-forming layer may be crosslinked by irradiating the relief-forming layer with actinic radiation that triggers the photopolymerization initiator.

Light is generally applied to the entire surface of the relief-forming layer. Examples of the light (also called 'actinic radiation') include visible light, UV light, and an electron beam, but UV light is most generally used. When the side where there is a substrate, such as a relief-forming layer support, for fixing the relief-forming layer, is defined as the reverse face, only the front face need to be irradiated with light, but when the support is a transparent film through which actinic radiation passes, it is preferable to further irradiate from the reverse face with light as well. When a protection film is present, irradiation from the front face may be carried out with the protection film as it is or after peeling off the protection film. Since there is a possibility of polymerization being inhibited in the presence of oxygen, irradiation with actinic radiation may be carried out after superimposing a polyvinyl chloride sheet on the relief-forming layer and evacuating.

(Relief printing plate and process for making same)

The process for making a relief printing plate of the present invention preferably comprises a layer formation step of forming a relief-forming layer from the resin composition for laser engraving of the present invention, a crosslinking step of crosslinking the relief-forming layer by means of heat and/or light to thus obtain a relief printing plate precursor having a crosslinked relief-forming layer, and an engraving step of laser-engraving the relief printing plate precursor having the crosslinked relief-forming layer.

The relief printing plate of the present invention is a relief printing plate having a relief layer obtained by crosslinking and laser-engraving a layer formed from the resin composition for laser engraving of the present invention, and is preferably a relief printing plate made by the process for making a relief printing plate of the present invention.

The relief printing plate of the present invention may suitably employ an aqueous ink and a solvent ink when printing.

The layer formation step and the crosslinking step in the process for making a relief printing plate of the present invention mean the same as the layer formation step and the crosslinking step in the above-mentioned process for producing a relief printing plate precursor for laser engraving, and preferred ranges are also the same.

<Engraving step>

The process for making a relief printing plate of the present invention preferably comprises an engraving step of laser-engraving the relief printing plate precursor having a crosslinked relief-forming layer.

The engraving step is a step of laser-engraving a crosslinked relief-forming layer that has been crosslinked in the crosslinking step to thus form a relief layer. Specifically, it is preferable to engrave a crosslinked relief-forming layer that has been crosslinked by irradiation with laser light according to a desired image, thus forming a relief layer. Furthermore, a step in which a crosslinked relief-forming layer is subjected to scanning irradiation by controlling a laser head using a computer in accordance with digital data of a desired image can preferably be cited.

This engraving step preferably employs an infrared laser. When irradiated with an infrared laser, molecules in the crosslinked relief-forming layer undergo molecular vibration, thus generating heat. When a high power laser such as a carbon dioxide laser or a YAG laser is used as the infrared laser, a large quantity of heat is generated in the laser-irradiated area, and molecules in the crosslinked relief-forming layer undergo molecular scission or ionization, thus being selectively removed, that is, engraved. The advantage of laser engraving is that, since the depth of engraving can be set freely, it is possible to control the structure three-dimensionally. For example, for an area where fine halftone dots are printed, carrying out engraving shallowly or with a shoulder prevents the relief from collapsing due to printing pressure, and for a groove area where a fine outline character is printed, carrying out engraving deeply makes it difficult for ink the groove to be blocked with ink, thus enabling breakup of an outline character to be suppressed.

In particular, when engraving is carried out using an infrared laser that corresponds to the absorption wavelength of the photothermal conversion agent, it becomes possible to selectively remove the crosslinked relief-forming layer at higher sensitivity, thus giving a relief layer having a sharp image.

As the infrared laser used in the engraving step, from the viewpoint of productivity, cost, etc., a carbon dioxide laser ($CO_2$ laser) or a semiconductor laser is preferable. In particular, a fiber-coupled semiconductor infrared laser (FC-LD) is preferably used. In general, compared with a $CO_2$ laser, a semiconductor laser has higher efficiency laser oscillation, is less expensive, and can be made smaller. Furthermore, it is easy to form an array due to the small size. Moreover, the shape of the beam can be controlled by treatment of the fiber.

With regard to the semiconductor laser, one having a wavelength of 700 to 1,300 nm is preferable, and one having a wavelength of 800 to 1,200 nm is more preferable, one having a wavelength of 860 to 1,200 nm is yet more preferable, and one having a wavelength of 900 to 1,100 nm is particularly preferable.

Furthermore, the fiber-coupled semiconductor laser can output laser light efficiently by being equipped with optical fiber, and this is effective in the engraving step in the present invention. Moreover, the shape of the beam can be controlled by treatment of the fiber. For example, the beam profile may be a top hat shape, and energy can be applied stably to the plate face. Details of semiconductor lasers are described in 'Laser Handbook 2nd Edition' (The Laser Society of Japan), 'Jitsuyo Laser Gijutsu' (Applied Laser Technology) (The Institute of Electronics and Communication Engineers), etc.

Moreover, as plate making equipment comprising a fiber-coupled semiconductor laser that can be used suitably in the process for making a relief printing plate employing the relief printing plate precursor of the present invention, those described in detail in JP-A-2009-172658 and JP-A-2009-214334 can be cited.

The process for making a relief printing plate of the present invention may as necessary further comprise, subsequent to the engraving step, a rinsing step, a drying step, and/or a post-crosslinking step, which are shown below.

Rinsing step: a step of rinsing the engraved surface by rinsing the engraved relief layer surface with water or a liquid containing water as a main component.

Drying step: a step of drying the engraved relief layer.

Post-crosslinking step: a step of further crosslinking the relief layer by applying energy to the engraved relief layer.

After the above-mentioned step, since engraving residue is attached to the engraved surface, a rinsing step of washing off engraving residue by rinsing the engraved surface with water or a liquid containing water as a main component may be added. Examples of rinsing means include a method in which washing is carried out with tap water, a method in which high pressure water is spray-jetted, and a method in which the engraved surface is brushed in the presence of mainly water using a batch or conveyor brush type washout machine known as a photosensitive resin letterpress plate processor, and when slime due to engraving residue cannot be eliminated, a rinsing liquid to which a soap or a surfactant is added may be used.

When the rinsing step of rinsing the engraved surface is carried out, it is preferable to add a drying step of drying an engraved relief-forming layer so as to evaporate rinsing liquid.

Furthermore, as necessary, a post-crosslinking step for further crosslinking the relief-forming layer may be added. By carrying out a post-crosslinking step, which is an additional crosslinking step, it is possible to further strengthen the relief formed by engraving.

The pH of the rinsing liquid that can be used in the present invention is preferably at least 9, more preferably

at least 10, and yet more preferably at least 11. The pH of the rinsing liquid is preferably no greater than 14, more preferably no greater than 13.5, yet more preferably no greater than 13.2, and particularly preferably no greater than 12.5. When in the above-mentioned range, handling is easy.

In order to set the pH of the rinsing liquid in the above-mentioned range, the pH may be adjusted using an acid and/or a base as appropriate, and the acid or base used is not particularly limited.

The rinsing liquid that can be used in the present invention preferably comprises water as a main component.

The rinsing liquid may contain as a solvent other than water a water-miscible solvent such as an alcohol, acetone, or tetrahydrofuran.

The rinsing liquid preferably comprises a surfactant.

From the viewpoint of removability of engraving residue and little influence on a relief printing plate, preferred examples of the surfactant that can be used in the present invention include betaine compounds (amphoteric surfactants) such as a carboxybetaine compound, a sulfobetaine compound, a phosphobetaine compound, an amine oxide compound, and a phosphine oxide compound.

Furthermore, examples of the surfactant also include known anionic surfactants, cationic surfactants, and nonionic surfactants. Moreover, a fluorine-based or silicone-based nonionic surfactant may also be used in the same manner.

With regard to the surfactant, one type may be used on its own or two or more types may be used in combination.

It is not necessary to particularly limit the amount of surfactant used, but it is preferably 0.01 to 20 mass% relative to the total mass of the rinsing liquid, and more preferably 0.05 to 10 mass%.

The relief printing plate having a relief layer above the surface of an optional substrate such as a support may be produced as described above.

From the viewpoint of satisfying suitability for various aspects of printing, such as abrasion resistance and ink transfer properties, the thickness of the relief layer of the relief printing plate is preferably at least 0.05 mm but no greater than 10 mm, more preferably at least 0.05 mm but no greater than 7 mm, and yet more preferably at least 0.05 mm but no greater than 3 mm.

Furthermore, the Shore A hardness of the relief layer of the relief printing plate is preferably at least 50° but no greater than 90°. When the Shore A hardness of the relief layer is at least 50°, even if fine halftone dots formed by engraving receive a strong printing pressure from a letterpress printer, they do not collapse and close up, and normal printing can be carried out. Furthermore, when the Shore A hardness of the relief layer is no greater than 90°, even for flexographic printing with kiss touch printing pressure it is possible to prevent patchy printing in a solid printed part.

The Shore A hardness in the present specification is a value measured by a durometer (a spring type rubber hardness meter) that presses an indenter (called a pressing needle or indenter) into the surface of a measurement target at 25°C so as to deform it, measures the amount of deformation (indentation depth), and converts it into a numerical value.

The relief printing plate of the present invention can be used in printing by a letterpress printer using any one of an aqueous and oil-based inks, and printing is also possible by a flexographic printer using a UV ink. The relief printing plate of the present invention has excellent rinsing properties, there is little engraving residue, the relief layer obtained has excellent printing durability, and printing can be carried out for a long period of time without plastic deformation of the relief layer or degradation of printing durability.

## EXAMPLE

The present invention is explained in further detail below by reference to Examples, but the present invention should not be construed as being limited to these Examples. Furthermore, 'parts' in the description below means 'parts by mass', and '%' means 'mass%', unless otherwise specified.

Moreover, the number-average molecular weight (Mn) of a polymer in the Examples are values measured by a Gel Permeation Chromatography (GPC) method (eluent: tetrahydrofuran) unless otherwise specified.

(Synthetic Examples)

<Synthesis of compound A-1, which comprises ionic group, which comprises (meth)acryloyl group as crosslinkable group, and which is plastomer at 20°C>

A three necked flask equipped with a stirrer was charged with 24.6 parts by mass of propylene glycol monomethyl ether acetate, stirred, flushed with nitrogen, and maintained at 75°C. Separately, a graduated cylinder was charged with 45.0 parts by mass of dodecyl methacrylate (Tokyo Chemical Industry Co., Ltd.), 1.3 parts by mass of methacrylic acid (Tokyo Chemical Industry Co., Ltd.), 0.47 parts by mass of dodecanethiol (Tokyo Chemical Industry Co., Ltd.), 0.27 parts by mass of azo-based initiator V-601 (Wako Pure Chemical Industries, Ltd.), and 36.9 parts by mass of propylene glycol monomethyl ether acetate, and stirred at room temperature for 10 minutes. Subsequently, the solution was added

dropwise to the three-necked flask over 2.5 hours, and stirring was carried out for 2 hours after the dropwise addition. Subsequently, the mixture was heated to 90°C and stirred for 2 hours. The mixture was cooled to room temperature, and 2.4 parts by mass of 2-(dimethylamino)ethyl methacrylate (Tokyo Chemical Industry Co., Ltd.) was added dropwise thereto over 1 hour to thus carry out neutralization. Subsequently, the solvent was removed under reduced pressure. The number-average molecular weight of a polymer thus obtained was 12,000; this resin was in a syrup form at 20°C and was a plastomer that flowed when an external force was applied and did not return to its original shape even when the external force was removed.

<Synthesis of Compound A-2, which comprises ionic group, which comprises (meth)acryloyl group as crosslinkable group, and which is plastomer at 20°C>

A three necked flask equipped with a stirrer was charged with 100.0 parts by mass of Shikoh UV-3000B (The Nippon Synthetic Chemical Industry Co., Ltd.), stirred, and maintained at 60°C. 1.98 parts by mass of 3-mercaptopropyl(dimethoxy)methylsilane (Tokyo Chemical Industry Co., Ltd.) was added dropwise thereto over 1 hour, and stirring was carried out for 3 hours after the dropwise addition. After it was confirmed by NMR that a thiol had disappeared, the mixture was cooled to room temperature. The number-average molecular weight of a polymer thus obtained was 19,000; this resin was in a syrup form at 20°C and was a plastomer that flowed when an external force was applied and did not return to its original shape even when the external force was removed.

<Synthesis of compound A-3, which comprises ionic group, which does not comprise (meth)acryloyl group as crosslinkable group, and which is plastomer at 20°C>

A three necked flask equipped with a stirrer was charged with 24.6 parts by mass of propylene glycol monomethyl ether acetate, stirred, flushed with nitrogen, and maintained at 75°C. Separately, a graduated cylinder was charged with 23.64 parts by mass of dodecyl methacrylate (Tokyo Chemical Industry Co., Ltd.), 2.00 parts by mass of methacrylic acid (Tokyo Chemical Industry Co., Ltd.), 0.47 parts by mass of dodecanethiol (Tokyo Chemical Industry Co., Ltd.), 0.27 parts by mass of azo-based initiator V-601 (Wako Pure Chemical Industries, Ltd.), and 36.9 parts by mass of propylene glycol monomethyl ether acetate, and stirred at room temperature for 10 minutes. Subsequently, the solution was added dropwise to the three-necked flask over 2.5 hours, and stirring was carried out for 2 hours after the dropwise addition. Subsequently, the mixture was heated to 90°C and stirred for 2 hours. The mixture was cooled to room temperature, and 4.91 parts by mass of *N,N*-dimethyldodecylamine (Tokyo Chemical Industry Co., Ltd.) was added dropwise thereto over 1 hour to thus carry out neutralization. Subsequently, the solvent was removed under reduced pressure. The number-average molecular weight of a polymer thus obtained was 12,000; this resin was in a syrup form at 20°C and was a plastomer that flowed when an external force was applied and did not return to its original shape even when the external force was removed.

<Synthesis of compound A-4, which does not comprise ionic group and (meth)acryloyl group, and which is plastomer at 20°C>

A three necked flask equipped with a stirrer was charged with 21.4 parts by mass of propylene glycol monomethyl ether acetate, stirred, flushed with nitrogen, and maintained at 75°C. Separately, a graduated cylinder was charged with 20.33 parts by mass of dodecyl methacrylate (Tokyo Chemical Industry Co., Ltd.), 2.00 parts by mass of methacrylic acid (Tokyo Chemical Industry Co., Ltd.), 0.47 parts by mass of dodecanethiol (Tokyo Chemical Industry Co., Ltd.), 0.23 parts by mass of azo-based initiator V-601 (Wako Pure Chemical Industries, Ltd.), and 32.1 parts by mass of propylene glycol monomethyl ether acetate, and stirred at room temperature for 10 minutes. Subsequently, the solution was added dropwise to the three-necked flask over 2.5 hours, and stirring was carried out for 2 hours after the dropwise addition. Subsequently, the mixture was heated to 90°C and stirred for 2 hours. The mixture was cooled to room temperature, and the solvent was removed under reduced pressure. The number-average molecular weight of a polymer thus obtained was 12,000; this resin was in a syrup form at 20°C and was a plastomer that flowed when an external force was applied and did not return to its original shape even when the external force was removed.

<Synthesis of Compound a-7, which comprises ionic group, which comprises (meth)acryloyl group as crosslinkable group, and which is plastomer at 20°C>

Synthesis was carried out in the same manner as for the synthesis of plastomer A-1 except that methacrylic acid was replaced by 2-(dimethylamino)ethyl methacrylate, and 2-(dimethylamino)ethyl methacrylate was replaced by acrylic acid, with the number of moles being unchanged. The number-average molecular weight of a polymer thus obtained was 11,000; this resin was in a syrup form at 20°C and was a plastomer that flowed when an external force

was applied and did not return to its original shape even when the external force was removed.

<Synthesis of Compound a-8, which comprises ionic group, which comprises (meth)acryloyl group as crosslinkable group, and which is plastomer at 20°C>

Synthesis was carried out in the same manner as for the synthesis of plastomer A-1 except that methacrylic acid was replaced by 2-(dimethylamino)ethyl methacrylate, and 2-(dimethylamino)ethyl methacrylate was replaced by methacrylic acid, with the number of moles being unchanged. The number-average molecular weight of a polymer thus obtained was 13,000; this resin was in a syrup form at 20°C and was a plastomer that flowed when an external force was applied and did not return to its original shape even when the external force was removed.

<Synthesis of compound A-5, which comprises ionic group, which comprises (meth)acryloyl group as crosslinkable group, and which is not plastomer at 20°C>

A three necked flask equipped with a stirrer was charged with 24.6 parts by mass of propylene glycol monomethyl ether acetate, stirred, flushed with nitrogen, and maintained at 75°C. Separately, a graduated cylinder was charged with 20.0 parts by mass of dodecyl methacrylate (Tokyo Chemical Industry Co., Ltd.), 6.76 parts by mass of methacrylic acid (Tokyo Chemical Industry Co., Ltd.), 0.47 parts by mass of dodecanethiol (Tokyo Chemical Industry Co., Ltd.), 0.27 parts by mass of azo-type initiator V-601 (Wako Pure Chemical Industries, Ltd.), and 36.9 parts by mass of propylene glycol monomethyl ether acetate, and stirring was carried out at room temperature for 10 minutes. Subsequently, the solution was added dropwise to the three-necked flask over 2.5 hours, and stirring was carried out for 2 hours after the dropwise addition. Subsequently, the mixture was heated to 90°C and stirred for 2 hours. The mixture was cooled to room temperature, and 12.4 parts by mass of 2-(dimethylamino)ethyl methacrylate (Tokyo Chemical Industry Co., Ltd.) was added dropwise thereto over 1 hour to thus carry out neutralization. Subsequently, the solvent was removed under reduced pressure. The number-average molecular weight of a polymer thus obtained was 11,000. This resin was a solid at 20°C and was a not a plastomer.

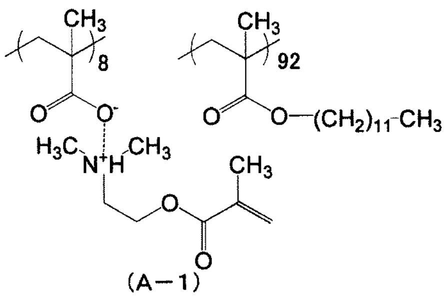

(A−1)

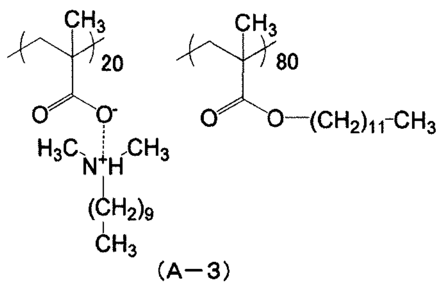

(A−3)

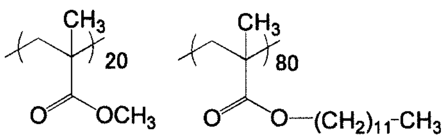

(A−4)

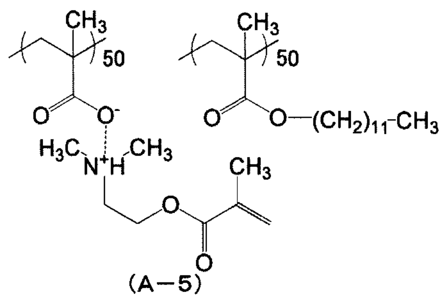

(A−5)

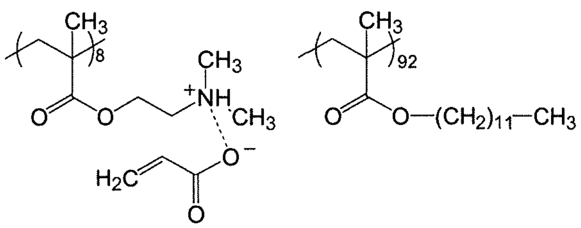

(a-7)

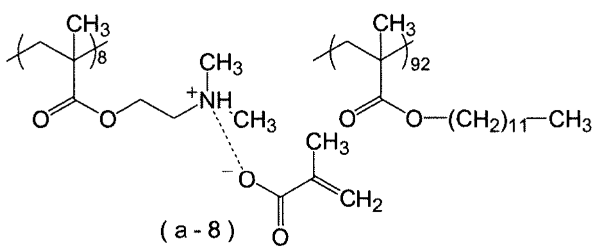

(a-8)

<Synthesis of crosslinking agent B-1>

A three necked flask equipped with a stirrer was charged with 40.0 parts by mass of methacrylic acid (Tokyo Chemical Industry Co., Ltd.) and stirred at 1°C. 73.0 parts by mass of 2-(dimethylamino)ethyl methacrylate (Tokyo Chemical Industry Co., Ltd.) was added dropwise thereto over 1 hour. Subsequently, stirring was carried out at room temperature for 2 hours, thus giving crosslinking agent B-1.

<Synthesis of crosslinking agent B-2, which comprises ionic group, and which comprises (meth)acryloyl group as crosslinkable group>

A three necked flask equipped with a stirrer was charged with 40.0 parts by mass of methacrylic acid (Tokyo Chemical Industry Co., Ltd.) and stirred at 1°C. 88.9 parts by mass of 3-aminopropylmethyldimethoxysilane (Tokyo Chemical Industry Co., Ltd.) was added dropwise thereto over 1 hour. Subsequently, stirring was carried out at room temperature for 2 hours, thus giving crosslinking agent B-2.

<Synthesis of crosslinking agent B-3, which does not comprise ionic group, and which comprises (meth)acryloyl group as crosslinkable group>

A three necked flask equipped with a stirrer was charged with 50.0 parts by mass of tetraethylene glycol diacrylate (Tokyo Chemical Industry Co., Ltd.) and stirred at 40°C. 14.9 parts by mass of 3-mercaptopropyl(dimethoxy)methyl silane (Tokyo Chemical Industry Co., Ltd.) was added dropwise thereto over 2 hours. Subsequently, stirring was carried out at room temperature for 4 hours, thus giving crosslinking agent B-3.

<Synthesis of crosslinking agent B-4, which comprises ionic group, and which does not comprise (meth)acryloyl group as crosslinkable group>

A three necked flask equipped with a stirrer was charged with 50.0 parts by mass of 4-amino styrene (Wako Pure Chemical Industries, Ltd.) and stirred at 40°C. 62.2 parts by mass of 4-carboxy styrene (Wako Pure Chemical Industries, Ltd.) was added dropwise thereto over 2 hours. Subsequently, stirring was carried out at room temperature for 4 hours, thus giving crosslinking agent B-4.

<Synthesis of crosslinking agent B-5, which comprises ionic group, and which does not comprise (meth)acryloyl group as crosslinkable group>

A three necked flask equipped with a stirrer was charged with 50 parts by mass of diaminoethyl disulfide (Tokyo Chemical Industry Co., Ltd.) and stirred at 40°C. 65.8 parts by mass of 4-carboxy styrene (Wako Pure Chemical Industries, Ltd.) was added dropwise thereto over 2 hours. Subsequently, stirring was carried out at room temperature for 4 hours, thus giving crosslinking agent B-5.

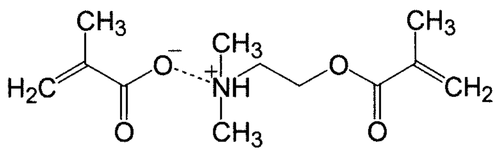

( B - 1 )

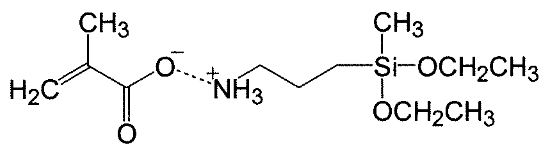

( B - 2 )

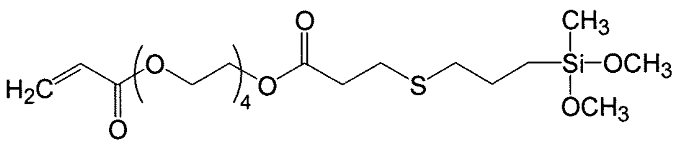

( B - 3 )

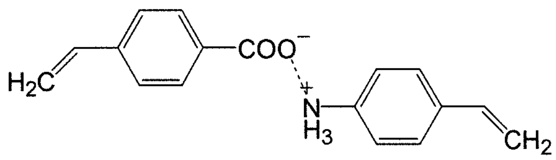

( B - 4 )

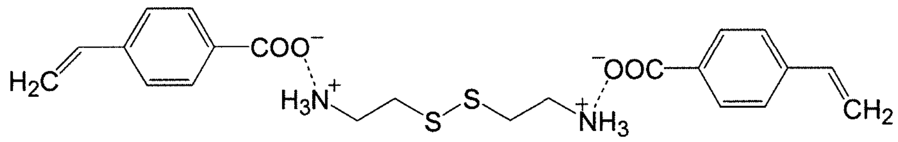

( B - 5 )

1. Preparation of resin composition for laser engraving

A three-necked flask equipped with a stirring blade and a condenser was charged with Component A described in Table 1 and Component B described in Table 1, and this mixture was heated at 70°C for 30 minutes while stirring.

Subsequently, the mixture was set at 40°C, 1 part by mass of Perbutyl Z (*t*-butyl peroxybenzoate, NOF Corporation) as Component D and 3 parts by mass of Component C described in Table 1 were added thereto, and stirring was carried out for 30 minutes.

Subsequently, 0.1 mass% (relative to the total solids content of the resin composition) of isobornyl acetate (Wako Pure Chemical Industries, Ltd.) was added as a fragrance, and stirring was carried out at 40°C for 10 min.

This operation gave the corresponding flowable coating solution for a crosslinkable relief-forming layer (resin composition for laser engraving). When '-' is given in Table 1, the corresponding component was not added in the above operations (the portion of mass that was not added was compensated for by increasing the total amount added while maintaining unchanged the ratio of amounts added of other materials).

2. Preparation of relief printing plate precursor for laser engraving

For each of the resin compositions for laser engraving of Examples 1 to 16 and Comparative Examples 1 to 6 obtained above a spacer (frame) having a predetermined thickness was placed on a PET substrate, and the composition was gently cast so that it did not overflow from the spacer (frame) and heated in an oven at 90°C to thus provide a relief-forming layer having a thickness of about 1 mm, thereby producing relief printing plate precursors for laser engraving. In this process, heating in the oven at 90°C was carried out until tackiness of the surface completely disappeared, thus carrying out thermal crosslinking.

3. Preparation of relief printing plate

A crosslinked relief-forming layer was engraved using the two types of lasers below.

As a carbon dioxide laser engraving machine, engraving by irradiation with a laser was carried out using an ML-9100 series high quality $CO_2$ laser marker (Keyence Corporation). A relief printing plate precursor for laser engraving was subjected to raster-engraving of a 1 cm square solid printed area using the carbon dioxide laser engraving machine under conditions of an output of 12 W, a head speed of 200 mm/sec, and a pitch setting of 2,400 DPI.

As a semiconductor laser engraving machine, SDL-6390 laser recording equipment with a fiber-coupled semiconductor laser (FC-LD) (JDSU, wavelength 915 nm) with a maximum output of 8.0 W was used. A 1 cm square solid printed area was raster-engraved using the semiconductor laser engraving machine under conditions of a laser output of 7.5 W, a head speed of 409 mm/sec, and a pitch setting of 2,400 DPI.

The thickness of a relief layer of each of the relief printing plates of Examples 1 to 16 and Comparative Examples 1 to 6 thus obtained was about 1 mm.

Furthermore, when the Shore A hardness of the relief layer was measured by the above measurement method, it was found to be 75°.

4. Evaluation of relief printing plate

The performance of a relief printing plate was evaluated in terms of the items below, and the results are shown in Table 1.

(4-1) Engraving sensitivity

The 'engraving depth' of the relief layer obtained by laser engraving a relief-forming layer of the relief printing plate precursor was measured as follows. The 'engraving depth' referred to here means the difference between an engraved position (height) and an unengraved position (height) when a cross-section of the relief layer was examined.

The 'engraving depth' in the present Examples was measured by examining a cross-section of a relief layer using a VK9510 Ultradepth Color 3D profile measurement microscope (Keyence Corporation). A large engraving depth means a high engraving sensitivity. The results are shown in Table 1 for each type of layer used for engraving.

(4-2) Swelling ratio

A film was cut into a size of 1 cm × 1 cm square, immersed in an ink, and allowed to stand at 25°C for 24 hours. The swelling ratio was calculated from the equation below using the mass before immersion and the mass after immersion. As the ink an undiluted aqueous ink (Aqua SPZ16 Red (Toyo Ink Manufacturing Co., Ltd.)) was used, or a solvent ink (XS-716 507 Blue (DIC GRAPHICS CORPORATION)) was used.

Swelling ratio is an indicator in which the smaller the swelling ratio, the greater the resistance to swelling, and in the present invention the closer it is to 100% the better.

$$\text{Swelling ratio (\%)} = (\text{mass after ink immersion} \div \text{mass before ink immersion}) \times 100$$

(4-3) Printing durability

A relief printing plate obtained was set in a printer (Model ITM-4, Iyo Kikai Seisakusho). As the ink an undiluted aqueous ink (Aqua SPZ16 Red (Toyo Ink Co., Ltd.) was used or a solvent ink (XS-716 507 Blue (DIC GRAPHICS CORPORATION)) was used. Printing was continued using as print paper Full Color Form M 70 (Nippon Paper Group, Inc., thickness 100 μm), 1% to 10% highlights being checked for the printed material. Completion of printing was defined as being when halftone dots were not printed, and the length (kilometers) of paper printed up to the completion of printing was used as an index. The larger the value, the better the evaluation of printing durability.

(4-4) Storage modulus

A sample was formed by peeling off a crosslinked relief-forming layer from a flexographic printing plate precursor and subjected to measurement of storage modulus E' at 100 Hz and 25°C using a Rheogel-E4000 (UBM). When the value for E' was in the range of at least 1.0 MPa but no greater than 20.0 MPa, it was good. The value for E' was preferably at least 0.1 MPa but no greater than 100 MPa, more preferably at least 1.0 MPa but no greater than 50.0 MPa, and particularly preferably at least 1.0 MPa but no greater than 20.0 MPa.

Table 1

| | Component | | | | | Engraving sensitivity (μm) | | Swelling ratio (%) | | Printing durability (km) | | Storage modulus (MPa) |
|---|---|---|---|---|---|---|---|---|---|---|---|---|
| | (Component A) | | (Component B) | | (Component C) Photothermal conversion agent | | | | | | | |
| | Plastomer | Amount added (parts by mass) | Crosslinking agent | Amount added (parts by mass) | | $CO_2$ laser | IR laser (FC-LD) | Aqueous ink | Solvent ink | Aqueous ink | Solvent ink | |
| Ex. 1 | UV-3000B | 50 | B-1 | 20 | CB | 350 | 380 | 105 | 106 | 85 | 48 | 11.1 |
| Ex. 2 | UV-3000B | 60 | B-1 | 10 | CB | 340 | 370 | 110 | 115 | 80 | 42 | 3.2 |
| Ex. 3 | UV-3000B | 30 | B-1 | 40 | CB | 300 | 370 | 108 | 113 | 75 | 39 | 19.4 |
| Ex. 4 | UV-3000B | 50 | Zinc methacrylate | 20 | CB | 380 | 390 | 103 | 102 | 90 | 50 | 13.5 |
| Ex. 5 | UV-3000B | 50 | Magnesium methacrylate | 20 | CB | 380 | 380 | 101 | 103 | 92 | 51 | 12.5 |
| Ex. 6 | UV-3000B | 50 | Zinc acrylate | 20 | CB | 370 | 390 | 102 | 104 | 90 | 52 | 12.0 |
| Ex. 7 | UV-3000B | 50 | Aluminum acrylate | 20 | CB | 380 | 390 | 103 | 102 | 89 | 51 | 13.5 |
| Ex. 8 | A-1 | 50 | Zinc methacrylate | 20 | CB | 380 | 390 | 101 | 104 | 88 | 50 | 14.2 |
| Ex. 9 | A-1 | 50 | Triethylene glycol dimethacrylate | 20 | CB | 330 | 390 | 101 | 105 | 80 | 45 | 10.5 |
| Ex. 10 | a-7 | 50 | B-1 | 20 | CB | 350 | 370 | 107 | 110 | 83 | 45 | 10.5 |
| Ex. 11 | a-8 | 50 | B-1 | 20 | CB | 350 | 380 | 108 | 104 | 84 | 45 | 11.4 |
| Ex. 12 | BGV-12 | 50 | B-1 | 20 | CB | 340 | 360 | 110 | 110 | 80 | 40 | 18.2 |
| Ex. 13 | UV-3000B | 50 | B-1 | 20 | None | 310 | 0 | 103 | 116 | 60 | 28 | 16.5 |
| Ex. 14 | A-1 | 50 | Triethylene glycol dimethacrylate | 20 | None | 300 | 0 | 105 | 115 | 60 | 30 | 12.2 |
| Ex. 15 | A-2 | 50 | B-2 | 20 | None | 290 | 0 | 105 | 118 | 55 | 25 | 13.9 |
| Ex. 16 | A-1 | 50 | B-3 | 20 | None | 290 | 0 | 110 | 120 | 50 | 20 | 10.1 |

(continued)

| | Component | | | | | Engraving sensitivity (μm) | | Swelling ratio (%) | | Printing durability (km) | | Storage modulus (MPa) |
|---|---|---|---|---|---|---|---|---|---|---|---|---|
| | (Component A) | | (Component B) | | (Component C) Photothermal conversion agent | | | | | | | |
| | Plastomer | Amount added (parts by mass) | Crosslinking agent | Amount added (parts by mass) | | $CO_2$ laser | IR laser (FC-LD) | Aqueous ink | Solvent ink | Aqueous ink | Solvent ink | |
| Comp. Ex. 1 | UV-3000B | 50 | Triethylene glycol dimethacrylate | 20 | CB | 280 | 290 | 105 | 175 | 55 | 5 | 13.5 |
| Comp. Ex. 2 | UV-3000B | 50 | B-4 | 20 | CB | 270 | 290 | 110 | 190 | 50 | 4 | 12.0 |
| Comp. Ex. 3 | UV-3000B | 50 | B-5 | 20 | CB | 280 | 280 | 108 | 185 | 50 | 5 | 11.8 |
| Comp. Ex. 4 | A-3 | 50 | Triethylene glycol dimethacrylate | 20 | CB | 280 | 300 | 160 | 180 | 5 | 3 | 5.6 |
| Comp. Ex. 5 | A-4 | 50 | Triethylene glycol dimethacrylate | 20 | CB | Crosslinked film could not be made, evaluation not possible | | | | | | |
| Comp. Ex. 6 | A-5 | 50 | Triethylene glycol dimethacrylate | 20 | CB | 120 | 100 | 110 | 109 | 4 | 4 | 42.5 |

The components in Table 1 are as follows.
UV-3000B: Shikoh UV-3000B, urethane acrylate oligomer (comprising (meth)acryloyl group at main chain terminal and being plastomer at 20°C) (The Nippon Synthetic Chemical Industry Co., Ltd.)
BGV-12: comprising (meth)acryloyl group in side chain and being plastomer at 20°C (Soken Chemical & Engineering Co., Ltd.)
Zinc methacrylate (Wako Pure Chemical Industries, Ltd.)
Magnesium methacrylate (Wako Pure Chemical Industries, Ltd.)
Zinc acrylate (Wako Pure Chemical Industries, Ltd.)
Aluminum acrylate (Wako Pure Chemical Industries, Ltd.)
Triethylene glycol dimethacrylate (Tokyo Chemical Industry Co., Ltd.)
CB: carbon black #45L (Mitsubishi Chemical Corporation, particle diameter: 24 nm, specific surface area: 125 $m^2$/g, DBP oil adsorption: 45 $cm^3$/100g)

## Claims

1. A resin composition for laser engraving, comprising

    (Component A) a compound that comprises a crosslinkable group and that is a plastomer at 20°C, and
    (Component B) a crosslinking agent,
    Component A and Component B comprising a (meth)acryloyl group as a crosslinkable group, and

    at least one of Component A and Component B comprising an ionic group.

2. The resin composition for laser engraving according to Claim 1, wherein the ionic group is a neutralized product of an acid and a base or a metal salt of an acid.

3. The resin composition for laser engraving according to Claim 1 or 2, wherein the ionic group is a metal salt of an acid.

4. The resin composition for laser engraving according to any one of Claims 1 to 3, wherein Component B comprises an ionic group.

5. The resin composition for laser engraving according to any one of Claims 1 to 4, wherein it comprises (Component C) a photothermal conversion agent.

6. The resin composition for laser engraving according to any one of Claims 1 to 5, wherein it comprises (Component D) a polymerization initiator.

7. The resin composition for laser engraving according to any one of Claims 1 to 6, wherein Component B is a metal salt of (meth)acrylic acid.

8. The resin composition for laser engraving according to any one of Claims 1 to 7, wherein Component B is a polyvalent metal salt of (meth)acrylic acid.

9. A relief printing plate precursor for laser engraving comprising a crosslinked relief-forming layer formed by crosslinking by means of heat and/or light a relief-forming layer comprising the resin composition for laser engraving according to any one of Claims 1 to 8.

10. A process for producing a relief printing plate precursor for laser engraving, comprising
    a layer formation step of forming a relief-forming layer comprising the resin composition for laser engraving according to any one of Claims 1 to 8, and
    a crosslinking step of crosslinking the relief-forming layer by means of heat and/or light to thus obtain a relief printing plate precursor comprising a crosslinked relief-forming layer.

11. A relief printing plate precursor for laser engraving obtained by the production process according to Claim 10.

12. A process for making a relief printing plate, comprising
    an engraving step of laser-engraving the relief printing plate precursor comprising a crosslinked relief-forming layer according to Claim 9 or 11 to thus form a relief layer.

13. A relief printing plate comprising a relief layer, made by the process for making a relief printing plate according to Claim 12.

14. Use of the composition according to any one of Claims 1 to 8 in a relief-forming layer of a relief printing plate precursor for laser engraving.

## INTERNATIONAL SEARCH REPORT

International application No.
PCT/JP2013/063742

A. CLASSIFICATION OF SUBJECT MATTER
*B41N1/12*(2006.01)i, *C08F290/00*(2006.01)i

According to International Patent Classification (IPC) or to both national classification and IPC

B. FIELDS SEARCHED

Minimum documentation searched (classification system followed by classification symbols)
B41N1/12, C08F290/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | WO 2003/022594 A1 (Asahi Kasei Corp.), 20 March 2003 (20.03.2003), & US 2004/157162 A1 & EP 1424210 A1 & CN 1522203 A | 1-14 |
| A | JP 2009-255510 A (Fujifilm Corp.), 05 November 2009 (05.11.2009), & US 2009/246469 A1 & EP 2105795 A1 & CN 101546124 A | 1-14 |
| A | JP 10-221850 A (Nippon Paint Co., Ltd.), 21 August 1998 (21.08.1998), & EP 859284 A1 | 1-14 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 July, 2013 (01.07.13) | 09 July, 2013 (09.07.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP H10221850 A
- JP 2009255510 A
- JP 5029648 B
- JP 2008063554 A
- JP 2012045801 A
- JP 2011245818 A
- JP 2009172658 A
- JP 2009214334 A


### Non-patent literature cited in the description


- Shinpan Kobunshi Jiten. Asakura Publishing Co., Ltd, 1988
- Senryo Binran. 1970
- Saishin Ganryo Binran. 1977
- Saisin Ganryo Ouyogijutsu. CMC Publishing, 1986
- Insatsu Inki Gijutsu. CMC Publishing, 1984
- Handbook of Adhesives. 1977
- Laser Handbook. The Laser Society of Japan
- Jitsuyo Laser Gijutsu. The Institute of Electronics and Communication Engineers